(19) Europäisches Patentamt
European Patent Office
Office européen des brevets

(11) EP 0 791 016 B1

(12) **EUROPEAN PATENT SPECIFICATION**

(45) Date of publication and mention of the grant of the patent:
**12.07.2000 Bulletin 2000/28**

(21) Application number: **95939076.6**

(22) Date of filing: **08.11.1995**

(51) Int Cl.$^7$: **C08F 2/38**

(86) International application number:
**PCT/US95/14428**

(87) International publication number:
**WO 96/15157 (23.05.1996 Gazette 1996/23)**

(54) **POLYMER SYNTHESIS**

POLYMERSYNTHESE

SYNTHESE DE POLYMERE

(84) Designated Contracting States:
**BE CH DE DK ES FR GB IT LI NL SE**

(30) Priority: **09.11.1994 AU PM930394**

(43) Date of publication of application:
**27.08.1997 Bulletin 1997/35**

(73) Proprietors:
- **E.I. DU PONT DE NEMOURS AND COMPANY Wilmington Delaware 19898 (US)**
- **COMMONWEALTH SCIENTIFIC AND INDUSTRIAL RESEARCH ORGANISATION Parkville, VIC 3052 (AU)**

(72) Inventors:
- **MOAD, Graeme Kallista, VIC 3791 (AU)**
- **MOAD, Catherine, Louise Kallista, VIC 3791 (AU)**
- **KRSTINA, Julia Chelsea, VIC 3196 (AU)**
- **RIZZARDO, Ezio Wheelers Hill, VIC 3150 (AU)**
- **BERGE, Charles, Thomas Wilmington, DE 19810-1607 (US)**
- **DARLING, Thomas, Robert Wilmington, DE 19810-1301 (US)**

(74) Representative: **Woodcraft, David Charles et al
High Holborn House
52/54 High Holborn
London WC1V 6SE (GB)**

(56) References cited:
**EP-A- 0 261 942**
**EP-A- 0 597 747**
**WO-A-92/09639**
**WO-A-93/22355**
**WO-A-95/12568**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention relates to a process for the synthesis of block copolymers and polymers of narrow polydispersity based on radical polymerisation of monomers in the presence of unsaturated chain transfer agents.
Block copolymers are useful as pigment dispersants, surfactants, compatibilizers for polymer blends, thermoplastic elastomers and in a variety of other applications. Polymers with narrow molecular weight dispersity can enhance melt viscosity behaviour, solids-viscosity relationships of polymer solutions and sharper melt transitions than the same composition at a higher polydispersity.

Convention commercial techniques for synthesising narrow polydispersed polymers and block copolymers include free-radial polymerisation. Radical polymerisation may be accomplished: (1) through the use of pseudo or quasi-living polymerisation. These techniques make use of low molecular weight transfer agents and/or chain terminators; (2) through the use of transformation chemistry; (3) through the use of multifunctional or polymeric initiators.

This invention provides a method of employing certain vinyl compounds in the synthesis of polymers with narrow molecular weight distribution and block copolymers by free radical polymerisation. Block polymerisation by radical polymerisation has been described in PCT Application No. WO 93/22355. This PCT application describes the mechanism of block copolymer formation but does not define conditions necessary for the preparation of high purity block copolymers, nor formation of narrow polydispersity resin.

PCT application No. WO 92/09639 discloses random copolymers prepared by copolymerising at least one ethylenically unsaturated hydrophobic monomer and at least one ethylenically unsaturated hydrophilic monomer in the presence of a functional chain transfer agent, and further describes surface active macromonomers formed therefrom.

Other such copolymers and homopolymers with olefinic polymerisable end groups are known from European patent application No. 0 261 942. Both documents disclose compositions having low polydispersity, but do not teach a method of increasing the molar amount of polymers produced from contacting a vinyl monomer and a vinyl-terminated compounds - both of the type described hereinafter - with free radicals produced from a free radical source, by adjusting the amount of vinyl monomer or of free radicals according to the conversation of the other. The prior art further does not disclose low polydispersity block copolymers produced according to this method.

This invention is directed to a process for the synthesis of polymers (block, homo- and copolymers) of the general formula:

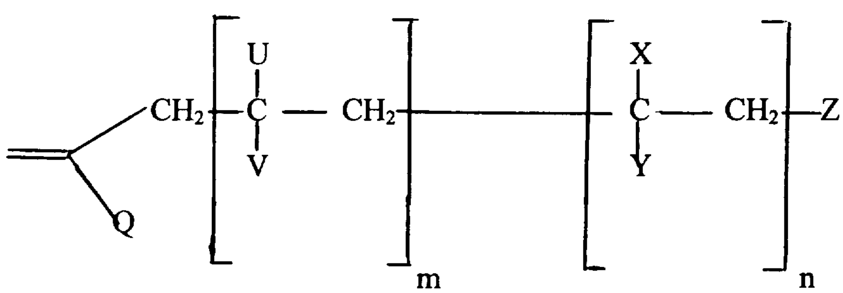

1

comprising contacting:

(i) a vinyl monomer of the formula

$$CH_2 = CUV$$

(ii) a vinyl-terminated compound of formula

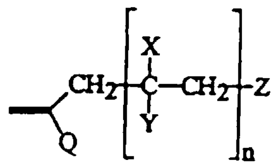

2

and

(iii) free radicals, produced from a free radical source; and increasing the molar amount of polymers, 1, by one or both of:

(a) decreasing the molar amount of (iii) for any given conversion of (i); and
(b) decreasing the molar amount of (i) for any given conversion of (iii); wherein:

Q is selected from the group H, R, OR, $O_2CR$, halogen, $CO_2H$, $CO_2R$, CN, $CONH_2$, CONHR, and $CONR_2$;
U is selected from H and R;
V is selected from R, OR, $O_2CR$, halogen, $CO_2H$, $CO_2R$, CN, $CONH_2$, CONHR, and $CONR_2$;
X is selected from H and R;
Y is selected from R, OR, $O_2CR$, halogen, $CO_2H$, $CO_2R$, CN, $CONH_2$, CONHR, and $CONR_2$;
Z is selected from the group H, $SR^1$, S(O)R, $S(O)_2R$, $R^2$ and $R^3$ and free radicals obtainable from a peroxy free-radical source provided that Z ≠ H when Q, V and Y are each $CO_2$Methyl and U and X are each Methyl;
R is selected from the group subtituted and unsubstituted alkyl, aryl, aralkyl, alkaryl and organosilyl groups wherein the substituent(s) are independently selected from the group carboxyl, epoxy, hydroxyl, alkoxy, amino and halogen;
$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen,
$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent (s) are independently selected from R, $OR^1$, $O_2CR$, halogen, $CO_2H$ (and salts), $CO_2R$, CN, $CONH_2$, CONHR, $CONR_2$,

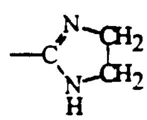

(and salts) and

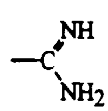

(and salts);
$R^3$ is selected from the group radical chain transfer agent-derived fragments of substituted and unsubstituted alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$;
m and n are independently ≥ 1; and

when either or both of m and n are greater than 1, the repeat units are the same or different.

Each alkyl in the defined substituents is independently selected from branched, unbranched, and cyclical hydrocarbons having 1 to 20, preferably 1-12, and most preferably 1-8 carbon atoms; halo or halogen refers to bromo,

iodo, chloro and fluoro, preferably chloro and fluoro, and organosilyl includes $-SiR^4(R^5)(R^6)$ and the like, wherein $R^4$, $R^5$, and $R^6$ are independently alkyl, phenyl, alkyl ether, or phenyl ether, preferably at least two of $R^4$, $R^5$, and $R^6$ being a hydrolyzable group, more preferably two of which are alkyl ether, wherein alkyl is preferably methyl or ethyl. A plurality of silyl groups can be condensed; for example, an organopolysiloxane such as $-Si(R^4)_2-O-Si(R^5)_2R^6$, wherein $R^4$, $R^5$, and $R^6$ are independently alkyl.

Preferred monomers are methyl methacrylate, ethyl methacrylate, propyl methacrylate (all isomers), butyl methacrylate (all isomers), 2-ethylhexyl methacrylate, isobornyl methacrylate, methacrylic acid, benzyl methacrylate, phenyl methacrylate, methacrylonitrile, alpha methyl styrene, methyl acrylate, ethyl acrylate, propyl acrylate (all isomers), butyl acrylate (all isomers), 2-ethylhexyl acrylate, isobornyl acrylate, acrylic acid, benzyl acrylate, phenyl acrylate, acrylonitrile, styrene, functional methacrylate, acrylates and styrene selected from glycidyl methacrylate, 2-hydroxyethyl methacrylate, hydroxypropyl methacrylate (all isomers), hydroxybutyl methacrylate (all isomers), diethylaminoethyl methacrylate, triethyleneglycol methacrylate, itaconic anhydride, itaconic acid, glycidyl acrylate, 2-hydroxyethyl acrylate, hydroxypropyl acrylate (all isomers), hydroxybutyl acrylate (all isomers), diethylaminoethyl acrylate, triethyleneglycol acrylate, methacrylamide, N-tert-butyl methacrylamide, N-n-butyl methacrylamide, N-methyl-ol methacrylamide, N-ethyl-ol methacrylamide, N-tert-butyl acrylamide, N-n-butyl acrylamide, N-methyl-ol acrylamide, N-ethyl-ol acrylamide, vinyl benzoic acid (all isomers), diethylamino styrene (all isomers), alphamethylvinyl benzoic acid (all isomers), diethylamino alphamethylstyrene (all isomers), para-methylstyrene, p-vinyl benzene sulfonic acid, trimethoxysilylpropyl methacrylate, triethoxysilylpropyl methacrylate, tributoxysilylpropyl methacrylate, dimethoxymethylsilylpropyl methacrylate, diethoxymethyl-silylpropylmethacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilylpropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, vinyl acetate, and vinyl butyrate, vinyl chloride, vinyl fluoride, vinyl bromide.

In a preferred process, (ii) is selected where Q, $-XYC-CH_2-$ and Z are independently selected from one or more of the following:

Q = H, methyl, ethyl, butyl (all isomers), cyclohexyl, methoxy, ethoxy, propoxy, butoxy (all isomers), phenoxy, acetate, propionate, butyrate (all isomers), benzoate, carboxylate, chlorine, bromine, fluorine, iodine, nitrile, amide, N-methylamide, N-ethylamide, N-propylamide, N,N-dimethylamide, N,N-diethylamide, N,N-dibutylamide, N-methyl-N-ethylamide, carboxylate ester of methyl, ethyl, propyl, butyl (all isomers), benzyl, phenyl, 2-hydroxyethyl, 3-hydroxypropyl, 2-hydroxypropyl, 4-hydroxy-butyl (all isomers), 3-hydroxybutyl (all isomers), 2-hydroxybutyl, 3-trimethoxysilylpropyl, 3-triethoxysilylpropyl, 3-tributoxy-silylpropyl, 3-tri(isopropoxy)silylpropyl, 2-aminoethyl, 3-amino-propyl, 2-aminopropyl, 4-aminobutyl (all isomers), 3-aminobutyl (all isomers), 2-aminobutyl (all isomers), 2-epoxypropyl, or 3-epoxypropyl;

$-XYC-CH_2-$ = derived from one or more of the following monomers: methyl methacrylate, ethyl methacrylate, propyl methacrylate (all isomers), butyl methacrylate (all isomers), 2-ethylhexyl methacrylate, isobornyl methacrylate, methacrylic acid, benzyl methacrylate, phenyl methacrylate, methacrylonitrile, styrene, alpha methyl styrene, glycidyl methacrylate, 2-hydroxyethyl methacrylate, hydroxypropyl methacrylate (all isomers), hydroxybutyl methacrylate (all isomers), diethylaminoethyl methacrylate, triethyleneglycol methacrylate, N-tert-butyl methacrylamide, N-n-butyl methacrylamide, N-methyl-ol methacrylamide, N-ethyl-ol methacrylamide, trimethoxysilylpropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, methyl acrylate, ethyl acrylate, propyl acrylate (all isomers), butyl acrylate (all isomers), 2-ethylhexyl acrylate, isobornyl acrylate, acrylic acid, benzyl acrylate, phenyl acrylate, acrylonitrile, styrene, glycidyl acrylate, 2-hydroxyethyl acrylate, hydroxypropyl acrylate (all isomers), hydroxybutyl acrylate (all isomers), diethylaminoethyl acrylate, triethyleneglycol acrylate, N-tert-butyl acrylamide, N-n-butyl acrylamide, N-methyl-ol acrylamide, N-ethyl-ol acrylamide, vinyl benzoic acid (all isomers), diethylamino styrene (all isomers), p-vinyl benzene sulfonic acid, para-methylstyrene, trimethoxysilylpropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, vinyl acetate, or vinyl butyrate;

Z = H, $SR^1$, $S(O)R$, $S(O)_2R$, $R^2$, or $R^3$;

R = methyl, ethyl, propyl, n-butyl, tert-butyl, isobutyl, phenyl, benzyl, 2-phenylpropyl, trimethoxysilylpropyl, tributoxysilyl-propyl, hydroxymethyl, 2-hydroxyethyl, 2-hydroxypropyl, 2-epoxypropyl, 2-aminoethyl, 2-aminopropyl, methoxymethyl, 2-methoxyethyl, 2-ethoxyethyl, 2-methoxy-propyl, or heptafluoropropyl;

$R^1$ = hydrogen, methyl, ethyl, propyl, n-butyl, tert-butyl, isobutyl, phenyl, benzyl, 2-phenylpropyl, trimethoxysilyl-propyl, tributoxysilylpropyl, hydroxymethyl, 2-hydroxyethyl, 2-hydroxypropyl, 2-epoxypropyl, 2-aminoethyl, 2-aminopropyl, methoxymethyl, 2-methoxyethyl, 2-ethoxyethyl, 2-methoxypropyl, or heptafluoropropyl;

$R^2$ = 2,4-dimethylpentanenitrile, 2-methylbutanenitrile, 2-methylpropanenitrile, cyclohexanecarbonitrile, 4-cyanopentanoic acid, N,N'-dimethyleneisobutyramidine, N,N'-dbnethyleneisobutyramidine hydrochloride, 2-amidinopropane, 2-amidinopropane hydrochloride, 2-methyl-N-[1,1-bis(hydroxymethyl) ethyl] propionamide, 2-methyl-N-[1,1-bis(hydroxymethyl)-2-hydroxyethyl] propionamide, 2-methyl-N-(2-hydroxyethyl) propionamide, isobutyamide hydrate, hydroxyl, or sulfate;

$R^3$ = 1,1-bis(carboethoxy)ethyl, 1,1-bis(carbomethoxy)ethyl, bis(carboethoxy)methyl, bis(carbomethoxy) methyl, 1-carboethoxy-1-phenyl ethyl, 1-carbomethoxy-1-phenyl ethyl, chlorine, bromine, fluorine, iodine, 1-methyl-1-[carbo(2-epoxypropoxy)]ethyl, 1-methyl-1-[carbo(2-hydroxyethoxy)]ethyl, 1-methyl-1-[carbo(4-hydroxy-butoxy)]ethyl, 1-methyl-1-[carbo(2-aminoethoxy)]ethyl, 1-methyl-1-[carbo(3-trimethoxysilylpropoxy)]ethyl, 1-methyl-1-[carbo(3-triethoxysilylpropoxy)]ethyl, 1-methyl-1-[carbo (3-dimethoxyethoxysilylpropoxy)]ethyl, 1-methyl-1-[carbo(2-methoxy-ethoxy)]ethyl, (N,N-di-methylamino)(cyano)methyl, N,N-dimethylamino-(benzo)methyl, thiomethyl(cyano)methyl, or thioethyl(cyano)methyl.

In a preferred process, (iii) is derived from one or more of the following initiators: 2,2'-azobis(isobutyronitrile), 2,2'-azobis(2-butanenitrile), 4,4'-azobis(4- cyanpentanoic acid), 1,1'-azobis(cyclohexane-carbonitrile), 2-(t-butylazo)-2-cyanopropane, 2,2'-azobis[2-methyl-N-(1,1)-bis(hydoxymethyl)-2-hydroxyethyl] propionamide, 2,2'-azobis[2-methyl-N-hydroxyethyl)]-propionamide, 2,2'-azobis(N,N'-dimethyleneisobutyramidine) dichioride, 2,2'-azobis(2-amidinopropane) dichioride, 2,2'-azobis(N,N'-dimethyleneisobutyramide), 2,2'-azobis(2-methyl-N-[1,1-bis(hydoxymethyl)-2-hydroxyethyl] propionamide, 2,2'-azobis[2-methyl-N-[1,1-bis(hydoxymethyl)ethyl] propionamide), 2,2'-azobis[2-methyl-N-(2-hydroxyethyl)-propionamide], 2,2'-azobis(isobutyramide) dihydrate, t-butyl-peroxyacetate, t-butylperoxybenzoate, t-butylperoxyoctoate, t-butylperoxyneodecanoate, t-butylperoxyisobutyrate, t-amylperoxypivalate, t-butylperoxypivalate, cumene hydroperoxide, dicumyl peroxide, benzoyl peroxide, potassium persulfate, ammonium persulfate.

The invention further provides a composition consisting essentially of a polymer with a polydispersity <1.7, having the formula:

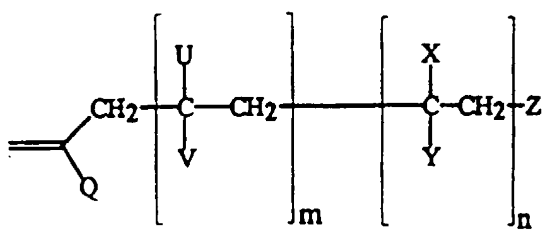

1

wherein

Q is selected from the group H, R, OR, $O_2CR$, halogen, $CO_2H$, $CO_2R$, CN, $CONH_2$, CONHR, and $CONR_2$;

U is selected from H and R;

v is selected from R, OR, $O_2CR$, halogen, $CO_2H$, $CO_2R$, CN, $CONH_2$, CONHR, and $CONR_2$;

x is selected from H and R;

Y is selected from R, OR, $O_2CR$, halogen, $CO_2H$, $CO_2R$, CN, $CONH_2$, CONHR, and $CONR_2$;

z is selected from the group H, $SR^1$, S(O)R, $S(O)_2R$, $R^2$ and $R^3$ and free radicals obtainable from a peroxy free-radical source provided that Z ≠ H when Q, V and Y are each $CO_2$Methyl and U and X are each Methyl;

R is selected from the group substituted and unsubstituted alkyl, aryl, aralkyl, alkaryl and organosilyl groups wherein the substituent(s) are independently selected from the group carboxyl, epoxy, hydroxyl, alkoxy, amino and halogen;

$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen,

$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent (s) are independently selected from R, $OR^1$, $O_2CR$, halogen, $CO_2H$ (and salts), $CO_2R$, CN, $CONH_2$, CONHR, $CONR_2$,

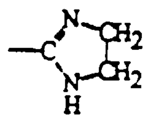

(and salts) and

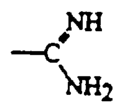

(and salts);

$R^3$ is selected from the group radical chain transfer agent-derived fragments of substituted and unsubstituted alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$,

m and n are independently ≥ 1; and

when either or both of m and n are greater than 1, the repeat units are the same or different.

The invention still further provides a composition consisting essentially of a polymer with a polydispersity <1.5, having the formula:

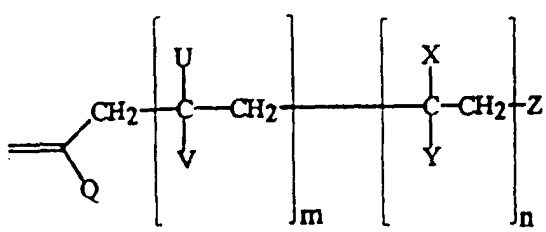

1

wherein

Q is selected from the group H, R, OR, $O_2CR$, halogen, $CO_2H$, $CO_2R$, CN, $CONH_2$, CONHR, and $CONR_2$;
U is selected from H and R;
V is selected from R, OR, $O_2CR$, halogen, $CO_2H$, $CO_2R$, CN, $CONH_2$, CONHR, and $CONR_2$;
x is selected from H and R;
Y is selected from R, OR, $O_2CR$, halogen, $CO_2H$, $CO_2R$, CN, $CONH_2$, CONHR, and $CONR_2$;
z is selected from the group H, $SR^1$, S(O)R, $S(O)_2R$, $R^2$ and $R^3$ and free radicals obtainable from a peroxy free-radical source;
R is selected from the group substituted and unsubstituted alkyl, aryl, aralkyl, alkaryl and organosilyl groups wherein the substituent(s) are independently selected from the group carboxyl, epoxy, hydroxyl, alkoxy, amino and halogen;

$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen,

$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent (s) are independently selected from R, $OR^1$, $O_2CR$, halogen, $CO_2H$ (and salts), $CO_2R$, CN, $CONH_2$, CONHR, $CONR_2$,

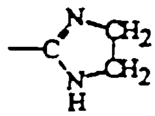

(and salts) and

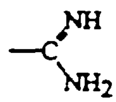

(and salts);

$R^3$ is selected from the group radical chain transfer agent-derived fragments of substituted and unsubstituted alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$;

m and n are independently ≥ 1; and

when either or both of m and n are greater than 1, the repeat units are the same or different.

## DETAILS OF THE INVENTION

Compound (2) can be prepared by several methods. Two non-restrictive examples of convenient methods of preparing compounds of structure (2) are by free radical polymerization in the presence of cobalt transfer agents or organic transfer agents that are capable of chain transfer by addition fragmentation. Cobalt chain transfer agents represent a broad class of complexes some of which are described in U.S. Patent No.4,694,054, U.S. Patent No.4,680,352, U.S. Patent No. 4,722,984 and WO 87/03605.

Organic chain transfer agents include allylic sulfides, allylic bromides, vinyl terminated methacrylic oligomers (dimers, trimers, etc or distributions), α-methylstyrene dimer and related compounds. Other methods of preparation are also possible.

Said compounds of structure (2) can also be a block copolymer of general structure (1) and the process can then be used to form tri- or multiblock copolymers.

Substituent Q of (1) and (2) is chosen to convey appropriate reactivity to the double bond in radical polymerization of the desired monomer or monomers under polymetiration conditions. It should preferably be aryl, $CO_2H$, $CO_2R$, CN, or $CONR_2$ in the case of activated monomers (*e.g*, styrene, acrylics) or H, R, OR, $O_2CR$, or halogen in the case of non activated monomers (e.g. vinyl acetate, vinyl chloride).

The substituents Q and Z can also be chosen so as to introduce any required end-group functionality into the polymer (1). These end groups can be the same or different and are chosen such that the final polymer is a telechelic polymer. Suitable end groups are those compatible with free radical polymerization and include epoxy, hydroxy, carboxylic acid, carboxylic ester.

Monomers, $CH_2$=CUV, as used herein include acrylic, methacrylic and styrenic monomers, mixtures thereof, and mixtures of these monomers with other monomers. As one skilled in the art would recognize, the choice of comonomers is determined by the steric and electronic properties of the monomer. The factors which determine copolymerizability of various monomers is well documented in the art.

When U and/or X= hydrogen, the use of reaction temperatures above 100°C has been found to favor block copolymer formation.

The process is compatible with forming (2) and the polymer (1) sequentially in a "one-pot" procedure. In this case, it is important to destroy residual transfer agent remaining from the synthesis of (2). For compounds (2) prepared in the presence of cobalt catalytic chain transfer agents, the use of potassium persulfate, a peroxide or similar reagent deactivates any cobalt chain transfer agent remaining from the compound (2) preparation.

The length of the $-(CXY-CH_2)_n-$ is determined by the molecular weight of (2). Unreacted (2) will constitute a contaminant. The conversion level of (2) will define the purity of (1). The higher the conversion of (2) the higher the purity of (1).

To obtain narrow dispersity in the final polymer, reaction conditions are preferably selected such that polymerization in the absence of (2) gives molecular weights substantially higher (at least 5-fold) than in the presence of (2). In the same manner, to obtain high block purity in the block copolymer synthesis, reaction conditions are selected such that polymerization in the absence of compound (2) gives molecular weights substantially higher (at least 5-fold) than in the presence of compound (2).

With this as a guide, the control of the molar amount of free radicals (iii) at any given conversion of (i) will determine how much polymer containing (i) and not (2) is formed. One can minimize the number of free radicals, via initiators, in the reaction media during the polymerization so that bimolecular termination reactions, or radical-radical reactions, are minimized. These reactions produce polymers that are undesirable when one is interested in narrow dispersity polymers or substantually pure block copolymers. Increasing the moles of (ii) in the presence of (iii) will enhance the transfer reaction which is necessary to produce block, telechelic polymers and homopolymers of narrow molecular weight dispersity. In like fashion, reducing the molar amount of monomer (i) in the reactor at any given time at any given conversion of (iii), will provide additional control thus assuring uptake of (ii) as a transfer agent. Slow, incremental uptake of (i) under conditions which optimize chain transfer contribute to narrow polydispersity. The present invention allows preparation of homo- and copolymers with substantially narrower polydispersity than can be prepared by conventional free radical polymerization. Polymers with polydispersity <1.5 are not available using conventional free radical polymerization technology. The discovered interrelationship of (a) to (b) allows preparation of polymers with polydispersities below 1.7 and even less than 1.5.

The process can be successfully conducted by bulk, solution, suspension or emulsion polymerization. However, bearing in mind the above-mentioned condition, a preferred process for forming high molecular weight block copolymers is by emulsion or dispersion polymerization techniques. Emulsion polymerization typically offers very high molecular weights for polymerization carried out in the absence of compound (2). As a consequence, it is possible to prepare high molecular weight, high purity block copolymers with narrow polydispersity. Other advantages of emulsion polymerization over solution or bulk polymerization are faster polymerization times, high conversions, avoidance of organic solvents, and low chain transfer to water.

The present process offers significant advantages over other processes for preparing block or narrow polydispersity polymers based on conventional living polymerization techniques (*e.g.* cationic, anionic, coordination or group transfer polymerization). Advantages include compatibility with monomers with active hydrogens (for example, methacrylic acid, 2-hydroxyethyl methacrylate, etc.), or reactive functionality (for example, glycidyl methacrylate), the use of protic media (for example, isopropanol, water), and use of inexpensive commercial grade monomers.

The success of block copolymerization via the emulsion process depends on the compatibility of the monomer (s) and compound (2). The polymerization of hydrophobic monomers (*e.g.* butyl methacrylate) and moderately hydrophobic compounds (2) (*e.g.* methyl methacrylate), or moderately hydrophobic monomers with hydrophilic compounds (2) (*e.g.* methacrylic acid) can be successfully carried out.

Emulsion polymerization of hydrophobic monomers (for example, styrene, butyl methacrylate, etc.) in the presence of water-soluble compounds (2) may lead to product contaminated with homopolymer of the hydrophobic monomers. In these circumstances, addition of appropriate cosolvents (for example, 2-butoxyethanol) to the emulsion polymerization medium gives improved yields of block copolymer.

Changing the hydrophobic-hydrophilic balance in the compound (2) also gives improved yield of block copolymer. For example, block copolymers based on hydrophobic monomers (for example, styrene, butyl methacrylate, etc.) and 60:40 methyl methacrylate-*co*-methacrylic acid compounds (2) are readily synthesized in high yield and purity by emulsion polymerization.

The low cost of the process means that purification of the block copolymer can be economically viable when this is necessary or desirable. Thus, lower yields of block copolymers can be tolerated than with other synthetic methods.

The process of the invention is further illustrated by the following Examples in which these abbreviations are used:

| | |
|---|---|
| EHMA | 2-ethylhexyl methacylate |
| *n*-BA | *n*-butyl acrylate |
| BAc | butyl acetate |

| | |
|---|---|
| EAc | ethyl acetate |
| GMA | glycidyl methacrylate |
| n-BMA | *n*-butyl methacrylate |
| t-BMA | *tert*-butyl methacylate |
| i-BMA | iso-butyl methacrylate |
| BzMA | benzyl methacrylate |
| EMA | ethyl methacrylate |
| HEMA | hydroxyethyl methacylate |
| iPrOH | 2-propanol |
| MAA | methacrylic acid |
| MEK | methylethyl ketone |
| MMA | methyl methacrylate |
| PhMA | phenyl methacrylate |
| S | styrene |
| pMS | p-methylstyrene |
| CHMA | cyclohexyl methacrylate |
| VAZO 52 | 2,2'-azobis(2,4dimethylpentanenitrile) |
| VAZO 88 | 1,1'-azobis(cyclohexanecarbonitrile) |
| WAKO VA044 | 2,2'-azobis(N,N'-dimethyleneisobutyramidine) dihydrochloride |
| iprCo(III)DMG | [bis[m-[(2,3-butanedione dioximato)(2-)-O:O']] tetrafluorodiborato (2-)-N,N,N',N'''] (1-methylethyl) (aqua) cobalt |
| MeCo(III)DEG | [bis[m-[(2,3-hexanedione dioximato)(2-)-O:O']] tetrafluorodiborato (2-) -N,N',N'',N'''] (methyl) (aqua) cobalt |

## EXAMPLES 1-9

Methacrylic Acid Block Copolymers by Emulsion Polymerization

This is the basic recipe for surfactantless emulsion polymerization and illustrates the use of block copolymers as latex stabilizers.

### Preparation of Methacrylic Acid-*block*-Methyl Methacrylate

| | |
|---|---|
| Water | 75.0 g |
| $NaHCO_3$ | 0.151 g |
| $MAA_{12}$-*block*-$BMA_4$ | 0.376 g |
| MAA Compound 2 ($^1$H NMR: $\overline{M}_n$ 950) | 10.07 g |
| MMA | 1.00 g |
| 4,4' azobis(4-cyanopentanoic acid) | 0.140 g |
| MMA | 10.0 g |

The water was degassed in a multi-neck, 250 mL reactor under nitrogen for 20 min. The solution was heated to 85°C. The sodium bicarbonate, block copolymer and MAA Compound 2 were added, and the solution was degassed for a further 10 min. The initiator and a portion of the MMA (1.00 g) were added as single shots and the remaining MMA added as a feed over 90 min. The reaction mixture was held at 85°C for a further 90 min.
GPC: $\overline{M}_n$ 3010, $\overline{M}_w$ 4270; Dispersity 1.42.

The yield of block copolymer vs. 'homopolymer' formed by emulsion polymerization depends on the relative hydrophobicity of the compound (2) and monomer. The examples given in the table show that, for systems where this is a problem (*e.g.* MAA-*block*-BMA), the yield of block copolymer are improved by use of an appropriate cosolvent.

Table 1.

| Methacrylic Acid Block Copolymers by Emulsion Polymerization[a] | | | |
|---|---|---|---|
| Example | Monomer | Cosolvent | % block[b] |
| 1 | MMA | none | 100 |
| 2 | EMA | none | 70 |
| 3 | nBMA | none | 45 |
| 4 | nBA | none | 20 |
| 5 | MMA/BMA 1:2 | none | 50 |
| 6 | MMA/BMA 2:1 | none | 60 |
| 7 | MMA//BMA triblock(l:2) | none | 60 |
| 8 | nBMA | 10 % 2-ethoxyethanol[c] | 60 |
| 9 | nBMA | 10 % 2-butoxyethanol[c] | 100 |

[a]Methacrylic acid macomonomer ($^1$H NMR: $M_n$ 950).
[b]Estimated by GPC. Remainder is 'B block' homopolymer
[c]Feed time increased to 270 min

**EXAMPLES 10 - 14**

Methacrylate Ester Based Block Copolymers

**Preparation of Phenyl Methacrylate-*block*-Butyl Methacrylate**

**A. Preparation of PhMA compound (2)**

| | | |
|---|---|---|
| | Water | 75 g |
| | SDS (1 wt% aq. solution) | 3 g |
| | 4,4'-azobis(4-cyanopentanoic acid) | 0.140 g |
| Monomer Shot | PhMA | 3.5 g |
| | MeCo(III)DEG | 15.0 mg |
| Monomer Feed | PhMA | 31.7 g |
| | MeCo(III)DEG | 11.8 mg |

The water, initiator and SDS were combined and degassed under nitrogen in a multi-necked 250 mL reactor. The mixture was heated to 80°C and the monomer shot added immediately. The monomer feed was added over 90 min. The temperature was increased to 85°C and held for a further 90 min.
GPC: $\overline{M}_n$ 1100 $\overline{M}_w$ 2400; Dispersity 2.18.

**B. Preparation of PhMA-block-BMA**

| | | |
|---|---|---|
| | PhMA compound (2) latex (33% solids)* | 30 g |
| Initiator Feed | $K_2S_2O_8$ (0.2 wt% aq. solution) | 56.8 mL |
| Monomer Feed | nBMA | 60 g |
| | a. 0-90 min 0.25 mL/min | |
| | b. 90-180 min 0.50 mL/min | |

*from Part A

The PhMA compound (2) latex ($\overline{M}_n$ 1100, $\overline{M}_w$ 2400; Dispersity 2.18) was heated to 80°C in a multi-neck 250

mL reactor under nitrogen for 50 min. The initiator and monomer feeds were added concurrently over 180 min. Portions of SDS (1 g of a 10 wt% aqueous solution) were added hourly during the monomer addition. After monomer addition was complete the reaction temperature was increased to 85°C and held for a further 90 min.
GPC: $\overline{M}_n$ 14500, $\overline{M}_w$ 33400; Dispersity 2.30

Table 2.

| Methacrylic Ester Block Copolymers prepared by Emulsion Polymerization | | | | | |
|---|---|---|---|---|---|
| Example | Compound 2 | Monomer | Block Composition[a] | $\overline{M}_n$[b] | Dispersity |
| 10 | PhMA | nBMA | $(PhMA)_7//(nBMA)_{94}$ | 14500 | 2.30 |
| 11 | MAA | MMA | $(MAA)_{11}//(MMA)_{14}$[c] | 3010 | 1.42 |
| 12 | MAA | nBMA[d] | $(MAA)_{11}//(nBMA)_{22}$ | 4030 | 2.31 |
| 13 | MMA | nBMA | $(MMA)_{19}//(nBMA)_{46}$ | 6700 | 1.19 |
| 14 | tBMA | nBMA | $(tBMA)_{17}//(nBMA)_{24}$ | 5780 | 1.33 |

[a]estimated from GPC
[b]GPC (polystyrene equivalents)
[c]estimated from $^1$H NMR
[d]10 % 2-butoxyethanol (see Table 1)

**EXAMPLES 15 - 19**

Narrow Polydispersity Polymers

These examples illustrate the preparation of a polymer of relatively narrow polydispersity by emulsion polymerization. Polydispersities (> 1.5) are narrower than expected by normal polymerization with chain transfer (2.0). The polydispersity typically narrows with increased monomer addition as shown in Table 3. To achieve narrow polydispersities it is necessary to control the rate of monomer addition to maintain relatively high % solids (typically in range 70-95%) and a constant monomer concentration.

**Preparation of Methyl Methacrylate-*block*-Butyl Methacrylate**

**A. Preparation of MMA compound (2)**

| | | |
|---|---|---|
| | Water | 150 g |
| | SDS (3 wt% aq. solution) | 6 g |
| | 4,4'-azobis(4-cyanopentanoic acid) | 0.280 g |
| Monomer Shot: | MMA | 7 g |
| | MeCo(III)DEG | 5 mg |
| Monomer Feed: | MMA | 63.4 g |
| | MeCo(III)DEG | 2.3 mg |

The water, initiator and SDS were combined and degassed under nitrogen in a multi-necked 250 mL reactor. The mixture was heated to 80°C and the monomer shot added immediately. The monomer feed was added over 90 min. The temperature was increased to 85°C and held for a further 90 min.
GPC: $\overline{M}_n$ 3500 $\overline{M}_w$ 5600; Dispersity 1.61.
$^1$H NMR: $\overline{M}_n$ 3100

**B. Preparation of MMA-*block*-BMA**

| | | |
|---|---|---|
| | MMA compound (2) latex (33 % solids)* | 30 g |
| Initiator Feed: | $K_2S_2O_8$ (0.4wt % aq. solution) | 28.4 mL/90 min |
| Monomer Feed: | nBMA | 20 g/90 min |

*from Part A

The MMA compound (2) was heated to 80°C in a multi-neck 250 mL reactor under nitrogen for 30 min. The initiator and monomer feeds were added concurrently over 90 min. The monomer and initiator additions were then repeated until a total of 100 g BMA was added. Portions of SDS (1 g of a 3 wt% aqueous solution) were added hourly during the monomer addition. After monomer addition was complete the reaction temperature was increased to 85°C and held for 90 min.
GPC: $\overline{M}_n$ 23800, $\overline{M}_w$ 33100; Dispersity 1.39

Table 3:

| Variation in Molecular Weight and Polydispersity with Monomer Addition (compound (2) = PMMA) | | | | | |
|---|---|---|---|---|---|
| Example | Monomer | monomer (g) | $\overline{M}_n$[a] | $\overline{M}_w/\overline{M}_n$ | $\overline{M}_n$(Calc)[b] |
| 15 | BMA | 0 | 3500 (3100[c]) | 1.6 | |
| | | 20 | 8300 (9700) | 1.5 | 9300 |
| | | 40 | 13200 (15400) | 1.4 | 15500 |
| | | 60 | 17700 (20100) | 1.3 | 21700 |
| | | 80 | 20000 (23600) | 1.3 | 27900 |
| | | 100 | 23800 (28100) | 1.4 | 34500 |
| 16 | MMA | 0 | 1850 (2100) | 1.5 | |
| | | 15.8 | 3800 (4320) | 1.4 | 4800 |
| | | 24.2 | 4770 (5300) | 1.4 | 6300 |
| | | 31.6 | 5740 (6500) | 1.5 | 7700 |
| | | 63.1 | 9790 (11200) | 2.7 | 13500 |
| 17 | MMA | 0 | 3260 (3700) | 1.5 | |
| | | 11.8 | 9900 (11300) | 1.4 | 10900 |
| | | 19.0 | 13700 (15700) | 1.5 | 15600 |
| | | 35.2 | 22100 (25300) | 1.6 | 26200 |
| | | 52.9 | 31300 (35900) | 1.8 | 37700 |
| | | 65.8 | 37600 (43200) | 2.1 | 46100 |
| 18 | BMA | 0 | 2000[c] | 1.6 | |
| | | 25.7 | 6700 (7900) | 1.2 | 8000 |
| | | 33.6 | 8400 (9900) | 1.2 | 9900 |
| | | 50.3 | 12300 (14500) | 1.2 | 13800 |
| | | 59.8 | 14900 (17600) | 1.2 | 16100 |
| | | 67.1 | 16800 (19800) | 1.2 | 17800 |
| | | 88.2 | 18400 (21700) | 1.4 | 22800 |
| 20 | EHMA | 0 | 2050[c] | 1.7 | |
| | | 20 | 4900 | 1.5 | 4800 |
| | | 40 | 7100 | 1.4 | 7600 |
| | | 60 | 10500 | 1.3 | 10400 |

[b]Mn-([monomer]/[compound (2)] x monomer Mn) + compound (2) Mn. Discrepancies between calculated and found Mn may reflect precision of compound (2) concentration.
[b]Mn-([monomer]/[compound (2)] x monomer Mn) + compound (2) Mn. Discrepancies between calculated and found Mn may reflect precision of compound (2) concentration.
[c]Mn of PMMA.

Table 3: (continued)

| Variation in Molecular Weight and Polydispersity with Monomer Addition (compound (2) = PMMA) | | | | | |
|---|---|---|---|---|---|
| Example | Monomer | monomer (g) | $\bar{M}_n$[a] | $\bar{M}_w/\bar{M}_n$ | $\bar{M}_n$(Calc)[b] |
| | | 78 | 11800 | 1.3 | 12900 |

[a]GPC molecular weight in polystyrene equivalents (values obtained by applying universal calibration in parentheses). Numbers rounded to nearest hundred.

[b]Mn-([monomer]/[compound (2)] x monomer Mn) + compound (2) Mn. Discrepancies between calculated and found Mn may reflect precision of compound (2) concentration.

**EXAMPLES 20 - 21**

Triblock Copolymers

These examples illustrate the synthesis of an ABA triblock copolymer. The procedure is compatible with at 'one-pot' operation.

**Preparation of MMA-*block*-BMA-*block*-MMA.**

**A. Preparation of MMA-*block*-BMA**

| | | | |
|---|---|---|---|
| | | MMA compound (2) latex* | 30 g |
| | | SDS (3 w% aq. solution) | 1 g |
| Initiator Feed | (0.316 mL/min) | $K_2S_2O_8$ (0.36wt % aq. solution) | 40.8 g |
| Monomer Feed | (0.218 mL/min) | nBMA | 25.2 g |

(*ca. 32 % solids, $\bar{M}_n$ 2040, Dispersity 1.51, prepared with iPrCo(III)DMG procedure similar to Example 15, part A)

The MMA compound (2) latex and SDS was placed in a multi-neck 250 mL reactor, degassed under vacuum, then heated to 80°C under nitrogen The initiator and monomer feeds were added concurrently over 130 min. After monomer addition was complete the reaction was held at 80°C for 90 min. A shot of surfactant was added (1g of 3 wt% aq. solution of SDS) at 60 min intervals
GPC: $\bar{M}_n$ 6650, $\bar{M}_w$ 8400; Dispersity 1.26.

**B. Preparation of MMA-*block*-BMA-*block*-MMA**

| | | | |
|---|---|---|---|
| | | MMA-block-BMA compound (2) latex* | 30 g |
| | | SDS (3 wt% aq. solution) | 1 g |
| Initiator Feed | (0.316 mL/min) | $K_2S_2O_8$ (0.36wt % aq. solution) | 21.5 g |
| Monomer Feed | (0.119 mL/min) | MMA | 7.3 g |

(*ca. 32 % solids, from part A)

The MMA compound (2) latex and SDS was placed in a multi-neck 250 mL reactor, degassed under vacuum, then heated to 80°C under nitrogen. The initiator and monomer feeds were added concurrently over 68 min. After monomer addition was complete the reaction was held at 80°C for 90 min. A shot of surfactant was added (1 g of 3wt % aq. solution of SDS) at 60 min intervals. The conversion based on % solids was 98%.
GPC: $\bar{M}_n$ 12660, $\bar{M}_w$ 16590; Dispersity 1.35

Table 4.

| Emulsion Triblock Copolymers | | | | | | |
|---|---|---|---|---|---|---|
| | | Macromonomer | | | Block | |
| Example | Step:Monomer | Composition | $M_n$[a] | Dispersity | $M_n$[a] | Dispersity |
| 20 | 1:BMA | MMA | 2040 | 1.51 | 6650 | 1.26 |
| | 2: MMA | MMA-*block*-BMA | 6650 | 1.26 | 12660 | 1.35 |
| 21 | 1:BMA | MMA | 3500 | 1.62 | 23800 | 1.39 |
| | 2:MMA | MMA-*block*-BMA | 23800 | 1.39 | 26200 | 1.52 |

[a]GPC (polystyrene equivalents)

**EXAMPLE 22**

'One Pot' Synthesis of (MMA-*co*-MAA)-*block*-BMA

These examples illustrate a 'one-pot' synthesis of compound (2) and block copolymer by emulsion polymerization.

**A. Preparation of MMA-*co*-MAA compound (2)**

| | | |
|---|---|---|
| | Water | 120.00 g |
| | MAA-*block*-BMA | 2.87 g |
| Solution 1 | iprCo(III)DMG | 7.5 mg |
| | WAKO VA-044 | 0.33 g |
| | MMA | 4.0 g |
| Feed 1 | MMA | 42.14g |
| | iprCo(III)DMG | 15.0 mg |
| Feed 2 | MAA | 15.60 g |
| | a. 0-20 min | 0.137 mL/min |
| | b. 20-40 min | 0.276 mL/min |
| | c. 40-60 min | 0.356 mL/min |

The MAA-*block*-BMA(stabilizer/surfactant)/water mixture was heated to 58°C in a multi-necked 500 mL reactor under nitrogen for 30 min. Solution 1 was added and the monomer feeds were added concurrently over 60 min. On completion of the monomer addition the reaction temperature was increased slowly to 80°C.
GPC: $\overline{M}_n$ 880, $\overline{M}_w$ 1400; Dispersity 1.59

**B. Preparation of (MMA-*co*-MAA}-*block*-BMA**

| | | |
|---|---|---|
| | MMA/MAA Compound 2 latex | from part A |
| | MAA-*block*-BMA | 0.288 g |
| | water | 9.3 g |
| | $K_2S_2O_8$ | 0.224 g |
| Initiator Feed | $K_2S_2O_8$ (1.25% aq. solution) | 28.4 mL |

(continued)

| | | |
|---|---|---|
| Monomer Feed | nBMA | 12 g |

The MMA/MAA compound (2) latex from Part A was held at 80°C for 40 min under nitrogen. MAA-b-BMA (surfactant) was added and the reactor degassed for a further 20 min. The initiator was then added as a single shot. The initiator and monomer feeds were added concurrently over 90 min. On completion of the feeds the reaction temperature was held at 80°C for 30 min and then increased to 85°C for 90 min.
GPC: $\overline{M}_n$ 3090, $\overline{M}_w$ 5370; Dispersity 1.74

**EXAMPLES 23 - 36**

Synthesis of block copolymers in solution

The following examples illustrate the synthesis of block copolymers from methacrylate compounds (2).

**Preparation of (MMA-*co*-MAA)-*block*-BMA**

| | | |
|---|---|---|
| | MMA-*co*-MAA Compound 2 ($\overline{M}_n$ 1031; Dispersity 1.53) | 10.0 g |
| | xylene | 30.0 g |
| | t-butyl peroxybenzoate | 0.1 g |
| Feed One | n-butyl methacrylate | 10.0 g |
| Feed Two | t-butyl peroxybenzoate | 0.2 g |
| | xylene | 10.0 g |

The compound (2) and initiator were dissolved in the solvent and heated to reflux under nitrogen. The monomer and initiator feeds were added concurrently over 180 min. After completion of the feeds, the mixture was heated under reflux for a further 180 min.
Conversion: > 95%.
GPC: $\overline{M}_n$ 1890, $\overline{M}_w$ 2640; Dispersity 1.40

Table 5.

**Solution Block Copolymers from Methacylate Monomers**

| | | | | Compound (2) | | | Block | |
|---|---|---|---|---|---|---|---|---|
| Ex. | Mon. | R[a] | Solvent | Composition | $\overline{M}_n$ | Disp. | $\overline{M}_n$ | Disp. |
| 23 | nBMA | 46 | iPrOH | $MAA_9$ | 880[c] | -- | 2400[d] | 1.50 |
| 24 | nBMA | 46 | iPrOH | $MAA_9$ | 880[c] | -- | 3050[d] | 1.53 |
| 25 | nBMA | 46 | EtOH | $MAA_9$-*co*-$BMA_5$ | 1620[d] | 2.2 | 2320[d] | 2.47 |
| 26 | BzMA | 47 | iPrOH | $MMA_{20}$-co-$MAA_5$[e] | 2460[b] | 1.23 | 6020[b] | 1.63 |
| 27 | BzMA | 47 | iPrOH | MMA10-co-MAA5 | 1600[b] | 1.71 | 5520[b] | 1.80 |
| 28 | BzMA | 47 | iPrOH | $BMA_{10}$-co-$MAA_5$ | 2040[b] | 2.56 | 6070[b] | 1.69 |
| 29 | BzMA | 47 | iPrOH | $EHmA_{10}$-co-$mAA_5$ | 1900[b] | 1.62 | 4020[b] | 1.61 |
| 30 | MMA-BMA[f] | 46 | iPrOH | $MAA_9$-*co*-$BMA_5$ | 1620[d] | 2.2 | 2950[d] | 1.81 |
| 31 | MMA-BMA[f] | 46 | iPrOH | $MAA_9$-*block*-$BMA_5$ | 2400[d] | 1.50 | 2790[d] | 1.85 |

[a]R = "recipe", similar to that of the Example referred to by number. All reactions were carried out at reflux. Conversions were typically >85%
[b]GPC (polystyrene equivalents).
[c]from NMR.
[d]GPC (PMMA equivalents).
[e]Compound (2) prepared by emulsion polymerization.
[f]1:1 mole ratio comonomers.

Table 5. (continued)

| Solution Block Copolymers from Methacylate Monomers | | | | | | | | |
|---|---|---|---|---|---|---|---|---|
| | | | | Compound (2) | | | Block | |
| Ex. | Mon. | R[a] | Solvent | Composition | $\overline{M}_n$ | Disp. | $\overline{M}_n$ | Disp. |
| 32 | MMA-BMA[f] | 46 | iPrOH | MAA | 860[c] | -- | 3060[b] | 1.64 |
| 33 | MMA | 46 | iPrOH | $HEMA_{11}$ | 1550[d] | -- | 3620[d] | 1.83 |
| 34 | MMA | 48 | xylene | MMA-co-MAA | 1031[b] | 1.53 | 2640[b] | 1.40 |
| 35 | nBMA | 23 | xylene | MMA | 890[b] | 1.97 | 1340[b] | 1.78 |
| 36 | MMA | | BAc | MMA-co-MAA | 1031[b] | 1.53 | 2068[b] | 1.38 |

[a]R = "recipe", similar to that of the Example referred to by number. All reactions were carried out at reflux. Conversions were typically >85%
[b]GPC (polystyrene equivalents).
[c]from NMR.
[d]GPC (PMMA equivalents).
[f]1:1 mole ratio comonomers.

**EXAMPLES 37-45**

Synthesis of block copolymers in solution

For monosubstituted monomers higher block purity is found when higher reaction temperatures are used. At low temperatures graft copolymer formation may dominate. Xylene and butyl acetate or other solvents with similar boiling point are preferred for block synthesese with monosubstituted monomers.

**Preparation of (MMA-*co*-MAA)-*block*-BA**

| | | |
|---|---|---|
| | Compound 2 ($\overline{M}_n$ 1031; Dispersity 1.53) | 8.88 g |
| | Xylene | 37.8 g |
| | t-butyl peroxybenzoate | 0.1 g |
| | n-butyl acrylate | 1.6 g |
| Feed | t-butyl peroxybenzoate | 0.16 g |
| | n-butyl acrylate | 9.5 g |

The compound (2) and initiator were dissolved in the solvent and heated to reflux under nitrogen. The monomer and initiator feed was added over 180 min. After completion of the feeds, the mixture was heated under reflux for a further 180 min.
Conversion: > 95%.
GPC: $\overline{M}_n$ 1760, $\overline{M}_w$ 2710; Dispersity 1.54

Table 6.

| Solution Block Copolymers from Monosubstituted Monomers | | | | | | | | | |
|---|---|---|---|---|---|---|---|---|---|
| | | | | Compound (2) | | | Block | | |
| Ex. | Mon. | R[a] | Solvent | Composition | $\overline{M}_n$ | Disp. | $\overline{M}_n$ | Disp. | Purity[b] |
| 37 | BA | 37 | xylene | MMA-co-MAA | 1031[d] | 1.53 | 1760[d] | 1.54 | >80% |
| 38 | BA | 46 | iPrOH | $MAA_9$ | 880[c] | - | 2620[d] | 2.45 | >50%[e] |

[a]R = "recipe", similar to that of the Example referred to by number. All reactions were carried out at reflux. Conversions were typically >85%
[b]from comparison of GPC and NMR molecular weights
[c]from NMR
[d]GPC (polystyrene equivalents)
[e]evidence of reducd block copolymer formation

Table 6. (continued)

| Solution Block Copolymers from Monosubstituted Monomers | | | | | | | | | |
|---|---|---|---|---|---|---|---|---|---|
| | | | | Compound (2) | | | | Block | |
| Ex. | Mon. | R[a] | Solvent | Composition | $\bar{M}_n$ | Disp. | $\bar{M}_n$ | Disp. | Purity[b] |
| 39 | BA | 37 | BAc | MMA-co-MAA | 1031[d] | 1.53 | 2683[d] | 1.76 | >80% |
| 40 | BA | 23 | xylene | MMA | 840[d] | 1.97 | 2100 [c] | 2.05 | >70% |
| 41 | S | 46 | iPrOH | MAA | 880[c] | - | 1890[d] | 2.10 | >50%[e] |
| 42 | S | 37 | BAc | MMA | 1640[d] | 2.22 | 2530[d] | 2.37 | >70% |
| 43 | S | 37 | BAc | nBMA | 1050[d] | 2.04 | 4650[d] | 2.79 | >70% |
| 44 | S | 37 | BAc | tBMA | 2620[d] | 2.62 | 3620[d] | 2.20 | >70% |
| 45 | S | 23 | xylene | MMA | 840[d] | 1.97 | 1780[c] | 2.04 | >70% |

[a]R = "recipe", similar to that of the Example referred to by number. All reactions were carried out at reflux. Conversions were typically >85%
[b]from comparison of GPC and NMR molecular weights
[c]from NMR
[d]GPC (polystyrene equivalents)

## EXAMPLE 46

### Preparation of MAA-*block*-BMA

| | | |
|---|---|---|
| | methacrylic acid Compound 2* | 15 g |
| | isopropanol | 62.8 g |
| | azobis(isobutyronitrile) | 0.32 g |
| | acetone | 2 mL |
| Feed | n-butyl methacrylate | 14.3 g |

*(MAA compound (2) having $\bar{M}_n$ 1040 and Dispersity 1.80).

The compound (2) and solvent were heated to reflux (ca. 80°C) under nitrogen. The initiator (dissolved in acetone) was added as a single shot and the monomer feed added over 180 min. After 90 min the initiator was replenished (0.16 g AIBN/ 1 mL acetone). After completion of feed the mixture was heated under reflux for a further 150 min.
Conversion: > 87 %
GPC: $\bar{M}_n$ 2580, $\bar{M}_w$ 4900; Dispersity 1.90.

## EXAMPLE 47

This example shows the successful 20-fold scale up of Example 46.

### Preparation of MAA-*block*-BMA

| | | | |
|---|---|---|---|
| | | methacrylic acid compound (2)* | 200 g |
| | | isopropanol | 1000 mL |
| | | azobis(isobutyronitrile) | 4.01 g |
| Feed | (1 mL/min) | n-butyl methacrylate | 326.1 g |

*($M_n$ from NMR 1204).

The compound (2) and solvent were place in a 2 L multinecked flask equipped with mechanical stirrer, degassed, and heated to reflux (ca. 80°C) under nitrogen. The initiator was added as a single shot and the monomer

feed commenced. At ca. 90 min intervals the initiator was replenished (2 g shots of AIBN). On completion of feed, the mixture was heated under reflux for a further 150 min.
Conversion: > 95 %
GPC: $\overline{M}_n$ 3532, $\overline{M}_w$5102; Dispersity 1.45

**EXAMPLE 48**

This example illustrates the synthesis of hydrophilic-hydrophobic block copolymers based on methacylate ester-methacrylic acid copolymers by solution polymerization.

**A. Preparation of MAA-co-BMA Compound (2)**

| | | | |
|---|---|---|---|
| | | Isopropanol<br>MAA<br>nBMA<br>2,2'-azobis(2-butanenitrile) | 20.06 g<br>1.21 g<br>3.86 g<br>0.25 g |
| Shot: | | IPrCo(III)DMG (0.35 wt% in isopropanol) | 7.5 mL<br>0.140g |
| Feed 1: | (0.128 mL/min) | IPrCo(III)DMG (0.33 wt% in isopropanol) | 30.7 mL |
| Feed 2: | (0.224 mL/min) | MAA<br>nBMA | 11.40 g<br>37.85 g |

The isopropanol was degassed under nitrogen in a multi-necked 250 mL reactor equipped with a mechanical stirrer. The monomers were then added and the mixture and heated to reflux (80°C). The shot was then added and the feeds added over 240 min by syringe pumps. Further initiator (0.125 g) was added at 120 min and 240 min. On completion of the feeds the temperature was held at 80°C for 90 min.
The conversion based on % solids was > 85%.
NMR composition: $MAA_5$-*co*-$BMA_{11}$
GPC(PMMA equivalents): $\overline{M}_n$ 2040, $\overline{M}_w$ 5210; Dispersity 2.56

**B. Preparation of MAA-co-BMA-*block*-Benzyl Methacrylate**

| | | | |
|---|---|---|---|
| | | MAA-co-nBMA compound (2)<br>solution* (60 wt% in isopropanol)<br>isopropanol<br>2,2'-azobis(2-butanenitrile) | <br>30.0 g<br>9.98 g<br>0.092 g |
| Feed: | (0.202 mL/min) | BzMA<br>isopropanol | 18.0 g<br>15.0 g |

*from Part A

The compound (2) solution and isopropanol were placed in a multi-neck 250 mL reactor fitted with a mechanical stirrer, degassed then heated to 80°C under nitrogen. The initiator was added and the monomer feed commenced and added over 180 min by syringe pump. Further aliquots of initiator were added at 90 min (0.049 g) and 180 min (0.087 g). The reaction was held at 80°C for a further 90 min. The conversion based on % solids was >94%.
NMR composition: $MAA_5$-*co*-$BMA_{11}$-block-$BzMA_{20}$
GPC(PMMA equivalents): $\overline{M}_n$ 6070, $\overline{M}_w$ 9770; Dispersity 1.61

## EXAMPLE 49

This example illustrates the synthesis of a hydrophilic-hydrophobic block copolymer based on HEMA by solution polymerization.

### A. Preparation of Hydroxyethyl Methacrylate Compound (2)

| | | |
|---|---|---|
| | Water | 75 g |
| Shot | HEMA | 3.5 g |
| | iPrCo(III)DMG | 4 mg |
| | 4,4'-azobis(4-cyanopentanoic acid) | 0.140 g |
| Feed | HEMA | 31.7 g |
| | iPrCo(III)DMG | 4.4 mg |

The water was degassed under nitrogen in a multi-necked 250 mL reactor equipped with a mechanical stirrer and heated to 80°C. The initial shot was then added and the momomer feed was added over 90 min by syringe pump. On completion of the feed further initiator (0.070 g) was added and the temperature was held at 80°C for 180 min. The conversion based on % solids was > 90%. NMR: $\overline{M}_n$ 1550

### B. Preparation of Hydroxyethyl Methacrylate-*block*-Methyl Methacrylate

| | | |
|---|---|---|
| | HEMA compound (2) solution (30% in water)* | 30 g |
| | isopropanol | 40 g |
| | azobisisobuyronitrile | 0.19 g |
| Monomer Feed | HEMA | 15.5 g |

*from Part A

The HEMA compound (2) and isopropanol were placed in a multi-neck 250 mL reactor fitted with a mechanical stirrer, degassed under vacuum, then heated to 80°C under nitrogen. The initiator was added and the monomer feed commenced and added over 120 min by syringe pump. Further aliquots of initiator were added at 90 min (0.09 g) and 180 min (0.07 g). The reaction was held at 80°C for a further 90 min. The conversion based on % solids was > 90%.
GPC: $\overline{M}_n$ 3620, $\overline{M}_w$ 6650; Dispersity 1.83

## EXAMPLES 50-52

This procedure illustrates the preparation of blocks from compounds (2) prepared with addition-fragmentation transfer agents in emulsion polymerization. Use of these reagents allows a wide range of end-group functionality to be introduced into the final product.

The recipe is compatible with a one-pot synthesis of block-copolymer from transfer agent and monomers.

**Preparation of Methyl Methacrylate-*block*-Butyl Methacrylate**

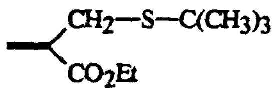

**(4)**

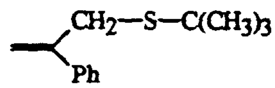

**(5)**

**A. Preparation of MMA compound (2)**

| | | | |
|---|---|---|---|
| | | Water<br>SDS (3 % aq. solution) | 37.5 g<br>3 g |
| Shot: | | MMA<br>allyl sulfide 4<br>4,4'-azobis(4-cyanopentanoic acid) | 1.56 g<br>0.078 g<br>0.071 g |
| Feed 1: | (0.188 mL/min) | MMA<br>allyl sulfide 4 | 14.04 g<br>0.668 g |
| Feed 2: | (0.188 mL/min) | MMA | 5 g |

The water, SDS were combined and degassed under vacuum in a multi-necked 250 mL reactor equipped with a mechanical stirrer. The mixture was heated to 80°C under nitrogen and the shot added. Feed 1 was added over 80 min by syringe pump. Feed 2 was then added over 28 min. On completion of the feeds the temperature was held at 80°C for a further 90 min. The conversion based on % solids was 98%.
GPC: $\overline{M}_n$ 5520 $\overline{M}_w$ 8770; Dispersity 1.59.

**B. Preparation of MMA-*block*-BMA.**

| | | | |
|---|---|---|---|
| | | MMA compound (2) latex (ca. 32 % solids)*<br>SDS (3 % aq. solution) | 27.1 g<br>1.0 g |
| Initiator Feed: | (0.316 mL/min) | $K_2S_2O_8$ (0.36 wt % aq. solution) | 23.7 g |
| Monomer Feed: | (0.218 mL/min) | nBMA | 15.5 g |

*from Part A

The MMA compound (2) latex and SDS was placed in a multi-neck 250 mL reactor, degassed under vacuum, then heated to 80°C under nitrogen. The initiator and monomer feeds were added concurrently over 70 min. After monomer addition was complete the reaction was held at 80°C for 90 min. The conversion based on % solids was 98%.
GPC: $\overline{M}_n$ 12600, Mw 17200; Dispersity 1.36

Table 7.

| Block Copolymers by Emulsion Polymerization | | | | | | | |
|---|---|---|---|---|---|---|---|
| | | | Compound (2) | | | Block | |
| Example | Monomer | Transfer Agent[a] | Composition | $\bar{M}_n$[b] | Disp. | $\bar{M}_n$[b] | Disp. |
| 50 | nBMA | 4 | MMA | 5520 | 1.59 | 12600 | 1.36 |
| 51 | MMA | 4 | nBMA | 5300 | 1.57 | 7300 | 1.43 |
| 52 | nBMA | 5[c] | MMA | 5450 | 1.57 | 24700 | 1.46 |

[a]Compound (2) prepared with addition-fragmentation transfer agent indicated.
[b]GPC (polystyrene equivalents).
[c]Compound (2) synthesis carried out at 90°C

## EXAMPLES 53 - 56

This procedure illustrates the preparation of blocks from compounds (2) prepared with addition-fragmentation transfer agents by solution polymerization. Use of these reagents allows a wide range of monomers to be used and permits various end-group functionality to be introduced into the final product.

**Preparation of Styrene-*block*-p-methylstyrene**

**A. Preparation of Styrene compound (2)**

| | | | |
|---|---|---|---|
| | | Styrene<br>Butyl acetate<br>allyl sulfide **4** | 30.10 g<br>10.03 g<br>1.63 g |
| Feed 1: | (0.210 mL/min) | Styrene<br>allyl sulfide **4** | 39.98 g<br>6.67 g |
| Feed 2: | (0.063 mL/min) | 1,1'-azobis(4-cyclohexanecarbonitrile)<br>Butyl acetate | 0.283 g<br>20.01 g |

The styrene solution was degassed under nitrogen in a multi-necked 250 mL reactor equipped with a mechanical stirrer. The mixture was heated to reflux (125°C) under nitrogen and the feeds added over 240 min by syringe pump. The compound (2) was isolated by two precipitations into acidified methanol. The conversion based on isolated compound (2) was 50%.
GPC: $\bar{M}_n$ 1880 $\bar{M}_w$ 2950; Dispersity 1.57.

**B. Preparation of Styrene-*block*-p-Methylstyrene.**

| | | | |
|---|---|---|---|
| | | Styrene compound (2)*<br>Butyl acetate<br>p-Methylstyrene | 4.02 g<br>3.53 g<br>0.46 g |
| Initiator Feed: | (0.0177 mL/min) | 1,1'-azobis(4-cyclohexanecarbonitrile)<br>Butyl acetate | 0.108 g<br>25.13 g |
| Monomer Feed: | (0.0132 mL/min) | p-Methylstyrene | 19.01 g |

*from Part A

The styrene compound (2) and butyl acetate were placed in a multi-neck 100 mL reactor under nitrogen and heated to reflux (ca. 125°C). After 10 min, the p-methylstyrene was added. The initiator and monomer feeds were then commenced and added over 24 h. The conversion based on monomer consumption was 84%. GPC: $\bar{M}_n$ 9500, $\bar{M}_w$ 24620; Dispersity 2.59 (includes compound (2) peak)

Table 8.

| Styrene Block Copolymers by Solution Polymerization | | | | | | | | |
|---|---|---|---|---|---|---|---|---|
| Example | Monomer | Transfer Agent[a] | Compound (2) | | Block | | | |
| | | | $\bar{M}_n$[b] | Disp. | $\bar{M}_n$[b] | Disp. | Solvent | %Conv.[c] |
| 53 | pMS | 4 | 1880 | 1.59 | 17260 | 1.61 | BAc | 90 |
| 54 | nBMA | 4 | 1880 | 1.59 | 9120 | 1.43 | MEK | 80 |
| 55 | nBMA | 4 | 1880 | 1.59 | 17930 | 1.62 | BAc | 60 |
| 56 | nBMA | 5 | 2330 | 1.55 | 16870 | 1.42 | MEK | 50 |

[a]Compound (2) prepared with addition-fragmentation transfer agent indicated.
[b]GPC (polystyrene equivalents).
[c]approx conversion of compound (2) to block. Monomer conversion is >85%.

## EXAMPLES 57 - 64

These examples describe a generalized process for the preparation of narrow polydispersity block copolymers and homopolymers by solution polymerization using vinyl compounds (2) selected from methacrylate dimers and trimers.

The general procedure for the polymerization is to slowly add the selected monomer(s), (i), and free radical initiator (iii) to the unsaturated transfer agent (2) at a rate to avoid excessive buildup in monomer concentration. A small amount of monomer(s) can be added to the transfer agent before the start of polymerization.

The polymerization reaction is started by heating the reactor containing (2) to the desired temperature and starting the gradual and continuous feeds of monomer(s) and free radical initiator.

The length of the polymerization time is dependant upon the temperature chosen and the molecular weight of the polymer desired. Higher temperatures allow for faster monomer feed rates and shortened times.

The choice for initiator depends upon the temperature used. It is convenient to add the initiator either in a solvent or mixed with some of the monomer(s) by means of a controlled rate feeder pump. When no solvent is used, the polymerization runs under bulk conditions at a well controlled rate.

In this process, the amount of initiator does not limit the polymer molecular weight. Reaction of unsaturated ends of (2) controls the degree of polymerization. The total number of moles of free radical initiator is generally set to be less than 15-20% of the number of moles of (2) used in the process.

The following Tables illustrate some of the specific polymers and their conditions for polymerization which have been practiced using this procedure.

Table 9:

| Solution Process Conditions | | | | | | |
|---|---|---|---|---|---|---|
| Ex. | Vinyl Transfer Agent | Monomer(s) | Temp. °C | Initiator | Polymeriz. Time hr | Comments |
| 57 | $MMA_3$<br><br>100 gm | MMA<br><br>500 gm | 60 | VAZO 52<br>4.29 gm<br>300 ml EAc | 29.8 | 25 gm MMA<br>at start |
| 58 | $MMA_3$<br><br>90 gm | 30:70<br>GMA/CHMA<br>1400 gm | 60 | VAZO 52<br>13.1 gm<br>386 ml EAC | 30 | 36 gm<br>monomer mix<br>at start |
| 59 | $MMA_3$ | GMA<br>322 gm | | VAZO 52<br>10.4 gm | | 16 gm GMA<br>at start |

Table 9: (continued)

| Solution Process Conditions | | | | | | |
|---|---|---|---|---|---|---|
| Ex. | Vinyl Transfer Agent | Monomer(s) | Temp. °C | Initiator | Polymeriz. Time hr | Comments |
| | 50 gm | 50:50 MMA/BMA 710 gm | 60 | 290 ml EAc | 29.4 | add GMA then MMA/BMA mix |
| 60 | $MMA_3$ 200 gm | 30:70 GMA/MMA 1115 gm | 100-132 | VAZO 88 12.5 gm 228 ml BAc | 9.7 | 50 gm monomer mix at start |
| 61 | $GMA_2$ | 15.6:84.4 GMA/MMA 1460 gm | 120 | VAZO 88 21.7 gm 346 ml BAc | 16.6 | 15 gm monomer mix at start |
| 62 | $GMA_2$ | 12:26:62 IBMA/GMA/MMA 557 gm | 130 | VAZO 88 11.6 gm 204 ml BAC | 11.5 | 5 gm monomer mix at start |
| 63 | $GMA_2$ | 23:20:57 BMA/GMA/MMA 755 gm | 120 | VAZO 88 12.8 gm 203 ml BAc | 24 | 2 gm monomer mix at start |
| 64 | $GMA_2$ | 10:32:58 IBMA/GMA/MMA 455 gm | 140 | t-butyl-perbenzoate 6.8 gm | 9.9 | 13 gm monomer mix at start |

Table 10 summarizes the polymerization illustrated in Table 9.

Table 10

| Summary of Narrow Polydispersity Polymers Made by Solution Process | | | |
|---|---|---|---|
| Example | Polymer Description | Mn(by GPC) | Dispersity |
| 57 | $MMA_n$ | 2700 | 1.58 |
| 58 | $MMA_2$//$GMA_m CHMA_n MMA_p$//MMA | 4970 | 1.44 |
| 59 | $MMA_2$//$GMA_m$//$MMA_n BMA_p$//MMA | 6800 | 1.48 |
| 60 | $MMA_2$//$GMA_m MMA_n$//MMA | 2170 | 1.44 |
| 61 | GMA//$MMA_m GMA_n$//GMA | 3360 | 1.45 |
| 62 | GMA//$MMA_m IBMA_n$ $GMA_p$//GMA | 3420 | 1.3 |
| 63 | GMA//$MMA_m BMA_n$ $GMA_p$//GmA | 4560 | 1.49 |
| 64 | GMA//$MMA_m BMA_n$ $GMA_p$//GMA | 2880 | 1.45 |

## Claims

**1.** A process for the synthesis of polymers having a polydispersity < 1.7, of the general formula:

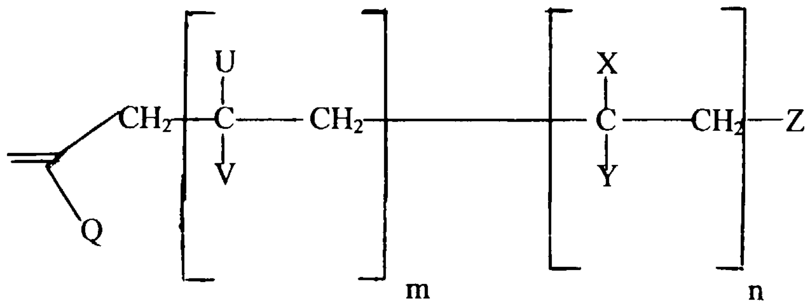

1

comprising contacting:

(i) a vinyl monomer of the formula:

$$CH_2 = CUV$$

(ii) a vinyl-terminated compound of formula

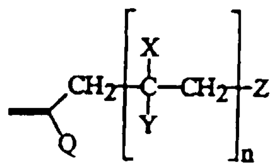

2

and
(iii) free radicals, produced from a free radical source; and increasing the molar amount of polymers, 1, by one or both of:

(a) decreasing the molar amount of (iii) for any given conversion of (i); and
(b) decreasing the molar amount of (i) for any given conversion of (iii); wherein:

Q is selected from the group H, R, OR, $O_2CR$, halogen, $CO_2H$, $CO_2R$, CN, $CONH_2$, CONHR, and $CONR_2$;
U is selected from H and R;
V is selected from R, OR, $O_2CR$, halogen, $CO_2H$, $CO_2R$, CN, $CONH_2$, CONHR, and $CONR_2$;
X is selected from H and R;
Y is selected from R, OR, $O_2CR$, halogen, $CO_2H$, $CO_2R$, CN, $CONH_2$, CONHR, and $CONR_2$;
Z is selected from the group H, $SR^1$, S(O)R, $S(O)_2R$, $R^2$ and $R^3$;
R is selected from the group substituted and unsubstituted alkyl, aryl, aralkyl, alkaryl and organosilyl groups wherein the substituent(s) are independently selected from the group carboxyl, epoxy, hydroxyl, alkoxy, amino and halogen;
$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen;
$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent(s) are independently selected from R, $OR^1$, $O_2CR$, halogen, $CO_2H$ (and salts), $CO_2R$, CN, $CONH_2$, CONHR, $CONR_2$,

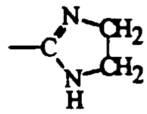

(and salts) and

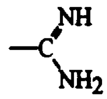

(and salts);
$R^3$ is selected from the group radical chain transfer agent-derived fragments of substituted and unsubstituted alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$;
m and n are independently ≥ 1; and

when either or both of m and n are greater than 1, the repeat units are the same or different.

**2.** A process according to Claim 1 wherein (i) is selected from one or more of following monomers, methyl methacrylate, ethyl methacrylate, propyl methacrylate, butyl methacrylate, 2-ethylhexyl methacrylate, isobornyl methacrylate, methacrylic acid, benzyl methacrylate, phenyl methacrylate, methacrylonitrile, alpha methyl styrene, methyl acrylate, ethyl acrylate, propyl acrylate, butyl acrylate, 2-ethylhexyl acrylate, isobornyl acrylate, acrylic acid, benzyl acrylate, phenyl acrylate, acrylonitrile, styrene, functional methacrylate, acrylates and styrene selected from glycidyl methacrylate, 2-hydroxyethyl methacrylate, hydroxypropyl methacrylate, hydroxybutyl methacrylate, diethylaminoethyl methacrylate, triethyleneglycol methacrylate, itaconic anhydride, itaconic acid, glycidyl acrylate, 2-hydroxyethyl acrylate, hydroxypropyl acrylate, hydroxybutyl acrylate, diethylaminoethyl acrylate, triethyleneglycol acrylate, methacrylamide, N-tert-butyl methacrylamide, N-n-butyl methacrylamide, N-methyl-ol methacrylamide, N-ethyl-ol methacrylamide, N-tert-butyl acrylamide, N-n-butyl acrylamide, N-methyl-ol acrylamide, N-ethyl-ol acrylamide, vinyl benzoic acid, diethylamino styrene, alphamethylvinyl benzoic acid, diethylamino alphamethylstyrene, para-methylstyrene, p-vinyl benzene sulfonic acid, trimethoxysilylpropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilylpropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, vinyl acetate, and vinyl butyrate, vinyl chloride, vinyl fluoride, vinyl bromide.

**3.** A process according to Claim 1 wherein (ii) is selected where Q, $-XYC-CH_2-$, Z and "n" are independently selected from one or more of the following:

Q = H, methyl, ethyl, butyl, cyclohexyl, methoxy, ethoxy, propoxy, butoxy, phenoxy, acetate, propionate, butyrate, benzoate, carboxylate, chlorine, bromine, fluorine, iodine, nitrile, amide, N-methylamide, N-ethylamide, N-propylamide, N,N-dimethylamide, N,N-diethylamide, N,N-dibutylamide, N-methyl-N-ethylamide, carboxylate ester of methyl, ethyl, propyl, butyl, benzyl, phenyl, 2-hydroxyethyl, 3-hydroxypropyl, 2-hydroxypropyl, 4-hydroxy-butyl, 3-hydroxybutyl, 2-hydroxybutyl, 3-trimethoxysilylpropyl, 3-triethoxysilylpropyl, 3-tributoxy-silylpropyl, 3-tri(isopropoxy)silylpropyl, 2-aminoethyl, 3-amino-propyl, 2-aminopropyl, 4-aminobutyl, 3-aminobutyl, 2-aminobutyl, 2-epoxypropyl, or 3-epoxypropyl,

$-XYC-CH_2-$ = derived from one or more of the following monomers: methyl methacrylate, ethyl methacrylate, propyl methacrylate, butyl methacrylate, 2-ethylhexyl methacrylate, isobornyl methacrylate, methacrylic acid, benzyl methacrylate, phenyl methacrylate, methacrylonitrile, styrene, alpha methyl styrene, glycidyl methacrylate, 2-hydroxyethyl methacrylate, hydroxypropyl methacrylate, hydroxybutyl methacrylate, diethylaminoethyl methacrylate, triethyleneglycol methacrylate, N-tert-butyl methacrylamide, N-n-butyl methacrylamide, N-methyl-ol methacrylamide, N-ethyl-ol methacrylamide, trimethoxysilylpropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, methyl acrylate, ethyl acrylate, propyl acrylate, butyl acrylate, 2-ethylhexyl acrylate, isobornyl acrylate, acrylic acid, benzyl acrylate, phenyl acrylate, acrylonitrile, styrene, glycidyl acrylate, 2-hydroxyethyl acrylate, hydroxypropyl acrylate, hydroxybutyl acrylate, diethylaminoethyl acrylate, triethyleneglycol acrylate, N-tert-butyl acrylamide, N-n-butyl acrylamide, N-methyl-ol acrylamide, N-ethyl-ol acrylamide, vinyl benzoic acid, diethylamino styrene, p-vinyl benzene sulfonic acid, para-methylstyrene, trimethoxysilylpropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, vinyl acetate, and vinyl butyrate.

Z = H, $SR^1$, S(O)R, $S(O)_2R$, $R^2$, or $R^3$;

R = methyl, ethyl, propyl, n-butyl, tert-butyl, isobutyl, phenyl, benzyl, 2-phenylpropyl, trimethoxysilylpropyl, tributoxysilyl-propyl, hydroxymethyl, 2-hydroxyethyl, 2-hydroxypropyl, 2-epoxypropyl, 2-aminoethyl, 2-aminopropyl, methoxymethyl, 2-methoxyethyl, 2-ethoxyethyl, 2-methoxy-propyl, or heptafluoropropyl;

$R^1$ = hydrogen, methyl, ethyl, propyl, n-butyl, tert-butyl, isobutyl, phenyl, benzyl, 2-phenylpropyl, trimethoxysilyl-propyl, tributoxysilylpropyl, hydroxymethyl, 2-hydroxyethyl, 2-hydroxypropyl, 2-epoxypropyl, 2-aminoethyl, 2-aminopropyl, methoxymethyl, 2-methoxyethyl, 2-ethoxyethyl, 2-methoxypropyl, or heptafluoropropyl;

$R^2$ = 2,4-dimethylpentanenitrile, 2-methylbutanenitrile, 2-methylpropanenitrile, cyclohexanecarbonitrile, 4-cyanopentanoic acid, N,N'-dimethyleneisobutyramidine, N,N'-dimethyleneisobutyramidine hydrochloride, 2-amidinopropane, 2-amidinopropane hydrochloride, 2-methyl-N-[1,1-bis(hydroxymethyl)ethyl] propionamide, 2-methyl-N-[1,1-bis(hydroxymethyl)-2-hydroxyethyl] propionamide, 2-methyl-N-2-hydroxyethyl) propionamide, isobutyamide hydrate, hydroxyl, or sulfate;

$R^3$ = 1,1-bis(carboethoxy)ethyl, 1,1-bis(carbomethoxy)ethyl, bis(carboethoxy)methyl, bis(carbomethoxy)methyl, 1-carboethoxy-1-phenyl ethyl, 1-carbomethoxy-1-phenyl ethyl, chlorine, bromine, fluorine, iodine, 1-methyl-1-[carbo(2-epoxypropoxy)]ethyl, 1-methyl-1-[carbo(2-hydroxyethoxy)] ethyl, 1-methyl-1-[carbo(4-hydroxy-butoxy)]ethyl, 1-methyl-1-[carbo(2-aminoethoxy)]ethyl, 1-methyl-1-[carbo(3-trimethoxysilylpropoxy)]ethyl, 1-methyl-1-[carbo(3-trimethoxysilylpropoxy)]ethyl, 1-methyl-1-[carbo(3-dimethoxyethoxysilylpropoxy)]ethyl, 1-methyl-1-[carbo(2-methoxy-ethoxy)] ethyl, (N,N-di-methylamino)(cyano)methyl, N,N-dimethylamino-(benzo)methyl, thiomethyl(cyano) methyl, or thioethyl(cyano)methyl;

$n \geq 1$ and when greater than 1, the repeat units are the same or different.

**4.** A process according to Claim 1 wherein (iii) is selected from one or more of the following: 2,2'-azobis(isobutyronitrile), 2,2'-azobis(2-butanenitrile), 4,4'-azobis(4-cyanpentanoic acid), 1,1'-azobis(cyclohexanecarbonitrile), 2-(t-butylazo)-2-cyanopropane, 2,2'-azobis[2-methyl-N-(1,1)-bis(hydoxymethyl)-2-hydroxyethyl] propionamide, 2,2'-azobis[2-methyl-N-hydroxyethyl)]-propionamide, 2,2'-azobis(N,N'-dimethylene-isobutyramidine) dichloride, 2,2'-azobis(2-amidinopropane) dichloride, 2,2'-azobis(N,N'-dimethyleneisobutyramide), 2,2'-azobis(2-methyl-N-[1,1-bis(hydroxymethyl)-2-hydroxyethyl] propionamide), 2,2'- azobis[2-methyl-N-[1,1- bis(hydoxymethyl)ethyl] propionamide), 2,2'-azobis[2-methyl-N-(2-hydroxyethyl) propionamide], 2,2'-azobis(iso- butyramide) dihydrate, t-butylperoxyacetate, t-butylperoxybenzoate, t-butylperoxyoctoate, t-butylperoxyneodecanoate, t-butylperoxyisobutyrate, t-amylperoxypivalate, t-butylperoxypivalate, cumene hydroperoxide, dicumyl peroxide, benzoyl peroxide, potassium persulfate, ammonium persulfate.

**5.** Process of Claim 1 wherein compound (2) is a block copolymer of general structure (1) and the product is a tri- or multi-block copolymer.

**6.** Process of Claim 1 employing a temperature above 100°C.

**7.** A process as claimed in any one of the preceding claims wherein the reaction conditions are selected such that polymerization in the absence of (2) gives a molecular weight at least 5-fold higher than in the presence of (2).

**8.** A composition consisting essentially of a block copolymer with a polydispersity < 1.7, having the formula:

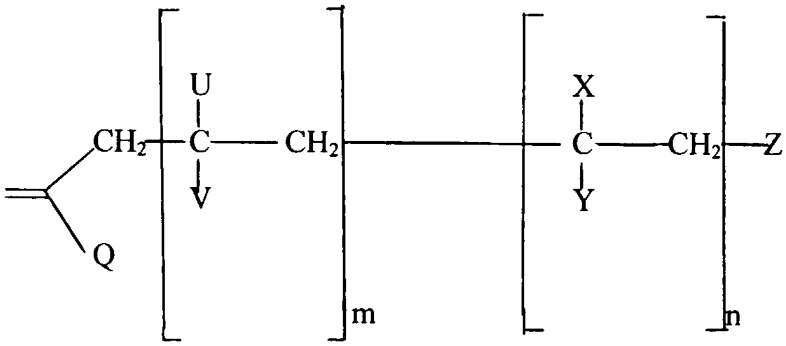

1

wherein

Q is selected from the group H, R, OR, $O_2CR$, halogen, $CO_2H$, $CO_2R$, CN, $CONH_2$, CONHR, and $CONR_2$;
U is selected from H and R;
V is selected from R, OR, $O_2CR$, halogen, $CO_2H$, $CO_2R$, CN, $CONH_2$, CONHR, and $CONR_2$;
X is selected from H and R;
Y is selected from R, OR, $O_2CR$, halogen, $CO_2H$, $CO_2R$, CN, $CONH_2$, CONHR, and $CONR_2$;
Z is selected from the group H, $SR^1$, S(O)R, $S(O)_2R$, $R^2$ and $R^3$;
R is selected from the group substituted and unsubstituted alkyl, aryl, aralkyl, alkaryl and organosilyl groups wherein the substituent(s) are independently selected from the group carboxyl, epoxy, hydroxyl, alkoxy, amino and halogen;
$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen,
$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent(s) are independently selected from R, $OR^1$, $O_2CR$, halogen, $CO_2H$ (and salts), $CO_2R$, CN, $CONH_2$, CONHR, $CONR_2$,

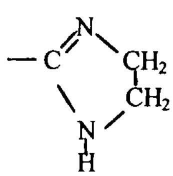

(and salts) and

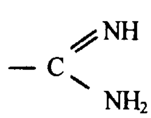

(and salts);
$R^3$ is selected from the group radical chain transfer agent-derived fragments of substituted and unsubstituted alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$;

m and n are independently ≥ 1; and

when either or both of m and n are greater than 1, the repeat units are the same or different.

**9.** A composition consisting essentially of a block copolymer with a polydispersity < 1.5, having the formula:

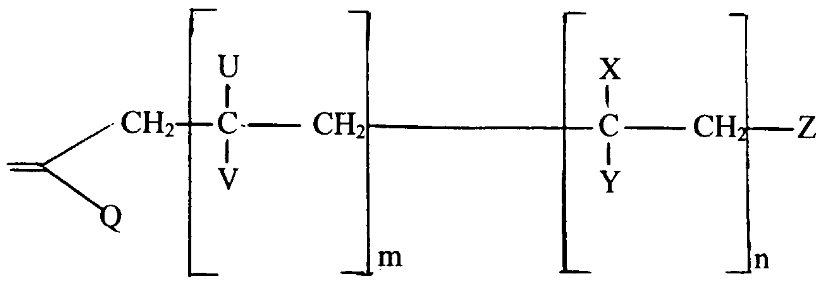

1

wherein

Q is selected from the group H, R, OR, $O_2CR$, halogen, $CO_2H$, $CO_2R$, CN, $CONH_2$, CONHR, and $CONR_2$;
U is selected from H and R;
V is selected from R, OR, $O_2CR$, halogen, $CO_2H$, $CO_2R$, CN, $CONH_2$, CONHR, and $CONR_2$;
X is selected from H and R;
Y is selected from R, OR, $O_2CR$, halogen, $CO_2H$, $CO_2R$, CN, $CONH_2$, CONHR, and $CONR_2$;
Z is selected from the group H, $SR^1$, S(O)R, $S(O)_2R$, $R^2$ and $R^3$;
R is selected from the group substituted and unsubstituted alkyl, aryl, aralkyl, alkaryl and organosilyl groups wherein the substituent(s) are independently selected from the group carboxyl, epoxy, hydroxyl, alkoxy, amino and halogen;
$R^1$ is selected from the group H, substituted and unsubstituted alkyl, aryl, aralkyl, alkaryl, organosilyl wherein the substituent(s) are independently selected from the group carboxyl, epoxy, hydroxyl, alkoxy, amino and halogen,
$R^2$ is selected from the group free radical initiator-derived fragments of substituted and unsubstituted alkyl, cycloalkyl, aryl, aralkyl, alkaryl, organosilyl, alkoxyalkyl, alkoxyaryl, sulfate groups wherein the substituent(s) are independently selected from R, $OR^1$, $O_2CR$, halogen, $CO_2H$ (and salts), $CO_2R$, CN, $CONH_2$, CONHR, $CONR_2$,

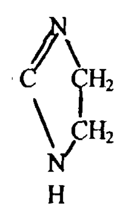

(and salts) and

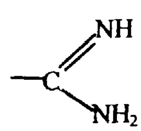

(and salts);
$R^3$ is selected from the group radical chain transfer agent-derived fragments of substituted and unsubstituted

alkyl, cycloalkyl, aryl, aralkyl, alkaryl, organosilyl, alkoxyalkyl, alkoxyaryl, and $PR_2$ groups wherein the substituent(s) are independently selected from R, $OR^1$, SR, $NR_2$, NHR, $O_2CR$, halogen, $CO_2H$, $CO_2R$, CN, $CONH_2$, CONHR, and $CONR_2$;
m and n are independently ≥ 1; and

when either or both of m and n are greater than 1, the repeat units are the same or different.

## Patentansprüche

**1.** Verfahren zur Synthese von Polymeren mit einer Polydispersität < 1,7, mit der allgemeinen Formel:

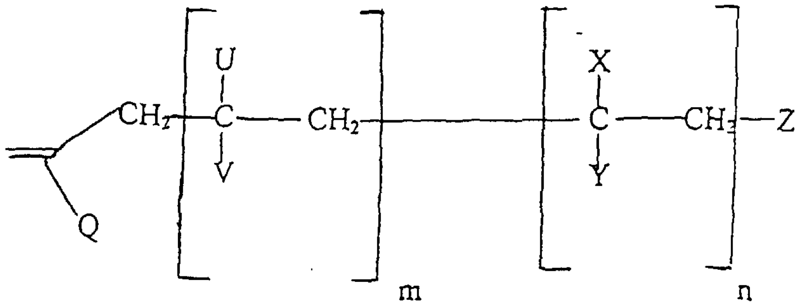

1

umfassend das in Kontakt bringen von

(i) einem Vinylmonomer der Formel:

$$CH_2=CUV$$

(ii) einer Verbindung mit Vinylendgruppen mit der Formel

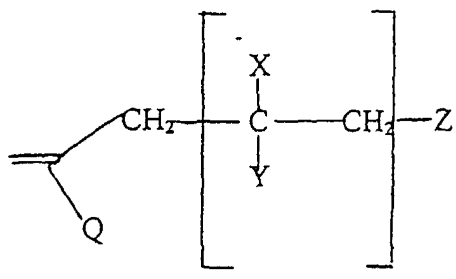

2

und
(iii) freien Radikalen, hergestellt aus einer Quelle für freie Radikale, und

Erhöhen der Molmenge der Polymere, durch eine oder beide der folgenden Maßnahmen:

(a) Verringern der Molmenge von (iii) für eine vorgegebene Umwandlung von (i) und
(b) Verringern der Molmenge von (i) für eine vorgegebene Umwandlung von (iii), wobei:

Q ausgewählt ist aus der Gruppe bestehend aus H, R, OR, $O_2CR$, Halogen, $CO_2H$, $CO_2R$, CN, $CONH_2$, CONHR und $CONR_2$;

U ausgewählt ist aus H und R;
V ausgewählt ist aus R, OR, $O_2CR$, Halogen, $CO_2H$, $CO_2R$, CN, $CONH_2$, CONHR und $CONR_2$;
X ausgewählt ist aus H und R;
Y ausgewählt ist aus R, OR, $O_2CR$, Halogen, $CO_2H$, $CO_2R$, CN, $CONH_2$, CONHR und $CONR_2$;
Z ausgewählt ist aus der Gruppe bestehend aus H, $SR^1$, S(O)R, $S(O)_2R$, $R^2$ und $R^3$;
R ausgewählt ist aus der Gruppe bestehend aus substituiertem und nicht-substituiertem Alkyl, Aryl, Aralkyl, Alkaryl und Organosilyl-Gruppen, wobei der bzw. die Substituent(en) unabhängig ausgewählt sind aus der Gruppe bestehend aus Carboxyl, Epoxy, Hydroxyl, Alkoxy, Amino und Halogen;
$R^1$ ausgewählt ist aus der Gruppe bestehend aus H, substituiertem und nicht-substituiertem Alkyl, Aryl, Aralkyl, Alkaryl, Organosilyl, wobei der bzw. die Substituent(en) unabhängig ausgewählt sind aus der Gruppe bestehend aus Carboxyl, Epoxy, Hydroxyl, Alkoxy, Amino und Halogen;
$R^2$ ausgewählt ist aus der Gruppe bestehend aus von freien Radikalinitiatoren abgeleiteten Fragmenten von substituiertem und nicht-subsituiertern Alkyl, Cycloalkyl, Aryl, Aralkyl, Alkaryl, Organosilyl, Alkoxyalkyl, Alkoxyaryl, Sulfatgruppen, wobei der bzw. die Substituent(en) unabhängig ausgewählt sind aus R, $OR^1$, $O_2CR$, Halogen, $CO_2H$ (und Salzen), $Co_2R$, CN, $CONH_2$, CONHR, $CONR_2$,

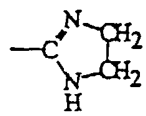

(und Salzen) und

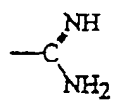

(und Salzen);
$R^3$ ausgewählt ist aus der Gruppe bestehend aus von Radikalkettenübertragungsmitteln abgeleiteten Fragmenten von substituiertem und nicht-substituiertem Alkyl, Cycloalkyl, Aryl, Aralkyl, Alkaryl, Organosilyl, Alkoxyalkyl, Alkoxyaryl und $PR_2$-Gruppen, wobei der bzw. die Substituent(en) unabhängig ausgewählt sind aus R, $OR^1$, SR, $NR_2$, NHR, $O_2CR$, Halogen, $CO_2H$, $CO_2R$, CN, $CONH_2$, CONHR und $CONR_2$;
m und n unabhängig $\geq 1$ und

die sich wiederholenden Einheiten gleich oder verschieden sein können, wenn eine oder beide der Bedeutungen von m und n größer als 1 sind.

**2.** Verfahren gemäß Anspruch 1, wobei (i) aus einem oder mehreren der folgenden Monomere ausgewählt ist: Methylmethacrylat, Ethylmethacrylat, Propylmethacrylat, Butylmethacrylat, 2-Ethylhexylmethacrylat, Isobornylmethacrylat, Methacrylsäure, Benzylmethacrylat, Phenylmethacrylat, Methacrylnitril, alpha-Methylstyrol, Methylacrylat, Ethylacrylat, Propylacrylat, Butylacrylat, 2-Ethylhexylacrylat, Isobornylacrylat, Acrylsäure, Benzylacrylat, Phenylacrylat, Acrylnitril, Styrol, funktionellem Methycrylat, Acrylaten und Styrolen ausgewählt aus Glycidylmethycrylat, 2-Hydroxythylmethycrylat, Hydroxypropylmethacrylat, Hydroxybutylmethaacrylat, Diethylaminoethylmethacrylat, Triethylenglycolmethacrylat, Itaconsäureahydrid, Itaconsäure, Glycidylacrylat, 2-Hydroxyethylacrylat, Hydroxypropylacrylat, Hydroxybutylacrylat, Diethylaminoethylacrylat, Triethylenglycolacrylat, Methacrylamid, N-tert-Butylmethycrylamid, N-n-butylamethacrylamid, NMethyl-olmethacrylamid, N-ethylol-methyacrylamid, N-tert-Butylacrylamid, N-n-butylacrylamid, N-Methylol-acrylamid, N-Ethylol-acrylaamid, Vinylbenzolsäure, Diethylaminostyrol, alphaMethylvinylbenzoesäure, Diethylamino-alphamethylstyrol, para-Methylstyrol, p-Vinylbenzolsulfonsäure, Trimethoxysilylpropylmethacrylat, Triethoxysilylpropylmethacrylat, Tributoxysilylpropylmethacrylat, Dimethoxymethylsilylpropylmetharylat, Diethoxymethylsilylpropylmethacrylt, Dibutoxymethylsilylpropylmethacrylat, Diisopropoxymethylsilylpropylmethacrylat, Dimethoxysilylpropylmetharylat, Diethoxysilylpropylmethacrylat, Dibutoxysilylpropylmethacrylat, Diisopropoxysilylpropylmethacrylat, Trimethoxysilylpropylyrylat, Triethoxysilylpropylacrylat, Tributoxysilylpropylacrylat, Dimethoxymethylsilypropylacrylat, Diethyoxymethylsilylpropylacrylat, Dibutoxymethylsilypropylacrylat, Diisopropoxymethylsiliylpropylacrylat, Dimethoxysilylpropylacrylat, Diethoxysilylpropylacrlygge, Dibutoxysilypropylacrylat, Diisopropoxysilylpropylacrylat, Vinylactat und Vinylbutyrat, Vinylchlorid,

Vinylfluorid, Vinylbromid.

3. Verfahren nach Anspruch 1, wobei (ii) ausgewählt ist aus Verbindungen, in denen Q, $-XYC-CH_2-$, Z und "n" unabhängig voneinander ausgewählt sind aus: Q=H, Methyl, Ethyl, Butyl, Cyclohexyl, Methoxy, Ethoxy, Propoxy, Butoxy, Phenoxy, Acetat, Propionat, Butyrat, Benzoat, Carboxylat, Chlor, Brom, Fluor, Iod, Nitril, Amid, N-Methylamid, N-Ethylamid, N-Proplamid, N,N-Dimethylamid, N,N-Diethylamid, N,N-Dibutylamid, N-Methyl-N-ethylamid, Carboxylatester von Methyl, Ethyl, Propyl, Butyl, Benzyl, Phenyl, 2-Hydroxyethyl, 3-Hydroxypropyl, 2-Hydroxypropyl, 4-Hydroxybutyl, 3-Hydroxybuty, 2-Hydroxybutyl, 3-Trimethoxysilylpropyl, 3-Triethoxysilylpropyl, 3-Tributoxysilylpropyl, 3-Tri(isopropoxy)silylpropyl, 2-Aminoethyl, 3-Aminopropyl, 2-Aminopropyl, 4-Aminobutyl, 3-Aminobutyl, 2-Aminobutyl, 2-Eposypropyl oder 3-Epoxypropyl;

$-XYC-CH_2-$ abgeleitet ist von einem oder mehreren der folgenden Monomere: Methylmethacrylat, Ethylmethacrylat, Propylmethacrylat, Butylmetharylat, 2-Ethylhexylmethacrylat, Isobomylmethacrylat, Methacrylsäure, Benzylmethacrylat, Phenylmethacrylat, Methacrylnitril, Styrol, alpha-Methylstyrol, Glycidylmethycrylat, 2-Hydroxyethylmethacrylat, Hydroxypropylmethacrylat, Hydroxybutylmethacrylat, Diethylaminoethylmethacrylat, Treithylenglycolmethacrylat, N-tert-Butylmethacrylamid, N-n-Butylmetharcylamid, N-Methylol-methacrylamid, N-Ethylol-methacrylamid, Trimethoxysilylpropylmethacrylat, Triethoxysilylpropylmethacrylat, Tributoxysilylpropylmethacrylat, Dimethoxymethylsilylpropylmethacrylat, Diethoxymethlylsilylpropylmethacrylat, Dibutoxymethylisliylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilpropylmethacrylat, Methylacrylat, Ethylacrylat, Propyacrylat, Butylacrylat, 2-Ethylhexylacrylat, Isobornylacrylat, Acrylsäure, Benzylacrylat, Phenylacrylat, Acrylnitril, Styrol, Glycidylacrylat, 2-Hydroxyethylacrylat, Hydroxypropylacrylat, Hydroxybutylacrylat, Diethylmainoethylacrylat, Treitehylenglycolacrylat, N-tert-Butylacrylamid, N-n-Butylacrylamid, N-Methylol-acrylamid, N-Ethylol-acrylamid, Vinylbenzoesäure, Dietylaminostyrol, p-Vinylbenzolsulfonsäure, para-Mehthylstyrol, Trimethoxysilylpropylacrylat, Triethoxysilylpropylacrylat, Tributoxysilylpropylacrylat, Dimethoxmethylsilylpropylacrylat, Diethoxymethylsilylpropylacrylat, Dibutoxymethylsilylproypylacrylat, Diisopropoxamthylsilylpropylacrylat, Dimethoxysilylpropylacrylat, Diethoxysilylpropylacrylat, Dibutoxysilylpropylacrylat, Disopropoxysilylpropylacrylat, Vinylacetat und Vinylbutyrat.
Z = H, $SR^1$, S(O)R, $S(O)_2R$, $R^2$ oder $R^3$;
R = Methyl, Ethyl, Propyl, n-Butyl, tert-Butyl, Isobutyl, Phenyl, Benzyl, 2-Phenylpropyl, Trimethoxysilylpropyl, Tributoxysilylpropyl, Hydroxymethyl, 2-Hydroxyethyl, 2-Hydroxypropyl, 2-Epoxypropyl, 2-Aminoethyl, 2-Aminopropyl, Methoxyethyl, 2-Ethoxyethyl, 2-Methoxypropyl oder Heptafluorpropyl;
$R^1$ = Wasserstoff, Methyl, Ethyl, Propyl, n-Butyl, tert-Butyl, Isobutyl, Phenyl, Benzyl, 2-Phenylpropyl, Trimethoxysilylpropyl, Tributoxysilylpropyl, Hydroxymethyl, 2-Hydroxyethyl, 2-Hydroxypropyl, 2-Epoxypropyl, 2-Aminoethyl, 2-Aminopropyl, Methoxymethyl, 2-Methoxyethyl, 2-Ethoxyethyl, 2-Methoxypropyl oder Heptafluorpropyl;
$R^2$ = 2,4-Dimethylpentannitril, 2-Methylbutannitril, 2-Methylpropannitril, Cyclohexancarbonitril, 4-Cyanpentansäure, N,N'-Dimethylensisobutyramidin, N,N'Diemthylenisobutyrmidinhydrochlorid, 2-Amidinopropan, 2-Amidinopropanhydrochlorid, 2-Methyl-N-[1,1-bis(hydroxymethyl)ethyl]propionamid, 2-Methyl-N-[1,1-bis(hydroxymethyl)-2-hydrioxyethyl]propionamid, 2-Methyl-N-(2-hydroxyethyl)propionamid, Isobutylamidhydrat, Hydroxyl oder Sulfat;
$R^3$ = 1,1-Bis(carboethoxy)ethyl, 1,1-Bis(carbomethoxy)ethyl, Bis(carboethoxy)methyl, Bis(Carbomethoxy)methyl, 1-Carboethoxy-1-phenylethyl, 1-Carbomethoxy-1-phenylethyl, Chlor, Brom, Fluor, Iod, 1-Methyl-1-[carbo (1-epoxypropoxy)]ethyl, 1-Methyl-1-[carbo(2-hydroxyethoxy)]ethyl, 1-Methyl-1-[carbo(4-hydroxybutoxy)] ethyl, 1-Methyl-1-[carbo(1-aminoethoxy)]ethyl, 1-Methyl-1-[carbo(3-trimethoxysilylpropoxy)]ethyl, 1-Methyl-1-[carbo(3-trimethoxysilylpropoxy)]ethyl, 1-Methyl-1-[carbo(3-diemthoxyethoxydilylpropoxy)]ethyl, 1-Methyl-1-[carbo(2-methoxyethoxy)]ethyl, (N,N-Dimethylamino)(cyano)methyl, N,N-Dimethylamino(benzo)methyl, Thiomethyl(cyano)methyl oder Thioethyl(cyano)methyl;
n ≥ 1 und, wenn es größer als 1 ist, die sich wiederholenden Einheiten gleich oder verschieden sind.

4. Verfahren nach Anspruch 1, worin (iii) ausgewählt ist aus einer oder mehreren der folgenden Verbindungen: 2,2'-Azobis(isobutyronitril), 2,2'-Azobis(2-butannitril), 4,4'-Azobis(4-cyanpentansäure), 1,1'-Azobis(cyclohexancarbonitril), 2-(t-Butylazo)-2-cyanopropan, 2,2'-Azobis[2-methyl-N-(1,1)-bis(hydroxymethyl)-2-hydroxyethyl]propionamid, 2,2'-Azobis[2-methyl-N-hydroxyethyl)]propionamid, 2,2'-Azobis(N,N'-dimethylenisobutyramidin)dichlorid, 2,2'-Azobis(2-amidinopropan)dichlorid, 2,2'-Azobis(N,N'-dimethylenisobutyramid), 2,2'-Azobis[2-methyl-N-[1,1-bis(hydroxymethyl)ethyl]propionamid), 2,2'-Azobis[2-methyl-N-(2-hydroxyethyl)propionamid], 2,2'-Azobis (isobutyramid)dihydrat, t-Butylperoxyacetat, t-Butylperoxybenzoat, t-Butylperoxyoctoat t-Butylperoxyneodecanoat, t-Butylperoxyisobutyrat, t-Amylperoxypivalat, t-Butylperoxypivalat, Cumolhydroperoxid, Dicumolperoxid,

Benzoylperoxid, Kaliumpersulfat, Ammoniumpersulfat.

**5.** Verfahren nach Anspruch 1, worin Verbindung (2) ein Blockcopolymer mit der allgemeinen Struktur (1) ist das Produkt ein Tri- oder Multiblockcopolymer ist.

**6.** Verfahren nach Anspruch 1, das eine Temperatur von über 100°C anwendet.

**7.** Verfahren nach einem der vorangehenden Ansprüche, worin die Reaktionsbedingungen so ausgewählt sind, daß die Polymerisation in Abwesenheit von (2) ein Molekulargewicht ergibt, das mindestens 5-mal so groß ist als in Anwesenheit von (2).

**8.** Zusammensetzung, die im wesentlichen aus einem Blockcopolymer mit einer Polydispersität < 1,7 besteht, das die Formel aufweist:

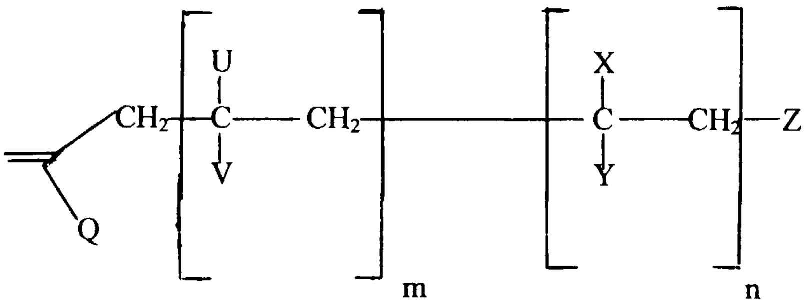

1

worin

Q ausgewählt ist aus der Gruppe bestehend aus H, R, OR, $O_2CR$, CN, $CONH_2$, CONHR und $CONR_2$;
U ausgewählt ist aus H und R;
V ausgewählt ist aus R, OR, $O_2CR$, Halogen, $CO_2H$, $CO_2R$, CN, $CONH_2$, CONHR, und $CONR_2$;
X ausgewählt ist aus H und R;
Y ausgewählt ist aus R, OR, $O_2CR$, Halogen, $CO_2H$, $CO_2R$, CN, $CONH_2$, CONHR, und $CONR_2$;
Z ausgewählt ist aus der Gruppe bestehend aus H, $SR^1$,S(O)R, $S(O)_2$, R2 und R3;
R ausgewählt ist aus der Gruppe bestehend aus subsituierten und unsubstituierten Alkyl-, Aryl-, Aralkyl-, Alkaryl- und Organosilylgruppen, worin der Substituent (die Substituenten) unabhängig voneinander ausgewählt sind aus der Gruppe Carboxyle, Epoxy, Hydroxyl, Alkoxy, Amin und Halogen,
$R^1$ ausgewählt ist aus der Gruppe H, substituierten und unsubstituierten Alkyl-, Aryl-, Aralkyl-, Alkaryl- und Organosilylgruppen, worin der Substituent (die Substituenten) unabhängig voneinander ausgewählt sind aus Carboxyl, Epoxy, Hydroxyl, Alkoxy, Amin und Halogen;
$R^2$ ausgewählt ist aus der Gruppe bestehend aus von freien Radikalinitiatoren abgeleiteten Fragmenten von substituierten und unsubtituierten Alkyl-, Cycloalkyl-, Aryl-, Aralkyl-, Alkaryl-, Organosilyl-, Alkoxyalkyl-, Alkoxyaryl-, Sulfatgruppen, worin der Substituent (die Substituenten) unabhängig voneinander ausgewählt sind aus R, $OR^1$, $O_2CR$, Halogen, $CO_2H$ (und Salzen), $CO_2R$, CN, $CONH_2$, CONHR; $CONR_2$,

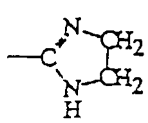

(und Salzen) und

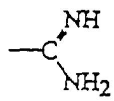

(und Salzen);

$R^3$ ausgewählt ist aus der Gruppe bestehend aus von Radikalkettenübertragungsmitteln abgeleiteten Fragmenten von substituierten und unsubstituierten Alkyl, Cycloalkyl, Aryl, Aralkyl, Alkaryl, Organosilyl, Alkoxyalkyl, Alkoxyaryl, und $PR_2$- Gruppen, worin der Substituent (die Substituenten) unabhängig voneinander ausgewählt sind aus R, $OR^1$, SR, $NR_2$, NHR, $O_2CR$, Halogen, $CO_2H$, $CO_2R$, CN, $CONH_2$, CONHR; $CONR_2$;

m und n unabhängig voneinander $\geq 1$ sind; und,

wenn eine oder beide Bedeutungen von m und n größer als 1 sind, die sich wiederholenden Einheiten gleich oder verschieden sind.

**9.** Zusammensetzung, die wesentlich besteht aus einem Block Copolymer mit einer Polydisperpersitet < 1,5 mit der Formel:

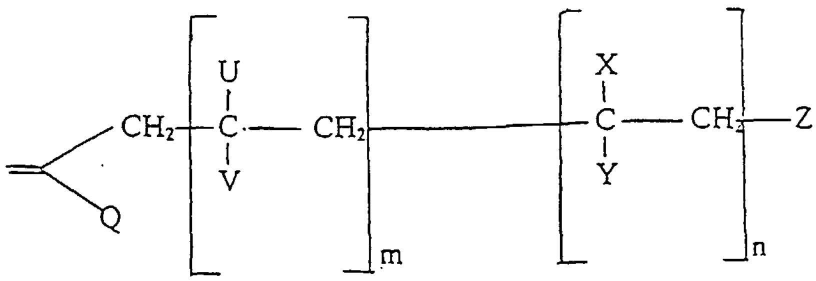

1

worin

Q ausgewählt ist aus der Gruppe bestehend aus H, R, OR, $O_2CR$, Halogen, $CO_2H$, $CO_2R$, CN, $CONH_2$, CONHR und $CONR_2$;

U ausgewählt ist aus H und R;

V ausgewählt ist aus R, OR, $O_2CR$, Halogen, $CO_2H$, $CO_2R$, CN, $CONH_2$, CONHR und $CONR_2$;

X ausgewählt ist aus H und R;

Y ausgewählt ist aus R, OR, $O_2CR$, Halogen, $CO_2H$, $CO_2R$, CN, $CONH_2$, CONHR und $CONR_2$;

Z ausgewählt ist aus der Gruppe H, $SR^1$, S(O)R, $S(O)_2R$, $R^2$ und $R^3$;

R ausgewählt ist aus der Gruppe bestehend aus substituierten'und unsubstituierten Alkyl, Aryl, Aralkyl, Alkaryl und Organosilylgruppen, worin der Substituent (die Substituenten) unabhängig voneinander ausgewählt sind aus der Gruppe Carboxyle, Epoxy, Hydroxyl, Alkoxy, Amino und Halogen,

$R^1$ ausgewählt ist aus der Gruppe H, substituierten und unsubstituerten Alkyl, Aryl, Aralkyl, Alkaryl, Organosilyl, worin der Substituent (die Substituenten) unabhängig voneinander ausgewählt sind aus der Gruppe Carboxyl, Epoxy, Hydroxyl, Alkoxy, Amino und Halogen,

$R^2$ ausgewählt ist aus der Gruppe bestehend aus von freien Radikalinitiatoren abgeleiteten Fragmenten von substituierten und unsubstituierten Alkyl, Cycloalkyl, Aryl, Aralkyl, Alkaryl, Organosilyl, Alkoxyalkyl, Alkoxyaryl, Sulfatgruppen, worin der Substituent (die Substituenten) unabhängig voneinander ausgewählt sind aus R, $OR^1$, $O_2CR$, Halogen, $CO_2H$ (und Salze), $CO_2R$, CN, $CONH_2$, CONHR und $CONR_2$;

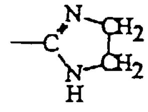

(und Salzen) und

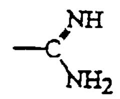

(und Salzen);
$R^3$ ausgewählt ist aus der Gruppe bestehend aus von Radikalkettenübertragungsmitteln abgeleiteten Fragmenten von substituierten und unsubstituierten Alkyl, Cycloalkyl, Aryl, Aralkyl, Alkaryl, Organosilyl, Alkoxyalkyl, Alkoxyaryl und $PR_2$-Gruppen, worin der Substituent (die Substituenten) unabhängig voneinander ausgewählt sind aus R, $OR^1$, SR, $NR_2$, NHR, $O_2CR$, Halogen, $CO_2H$, $CO_2R$, CN, $CONH_2$, CONHR und $CONR_2$;
m und n unabhängig voneinander ≥ 1 sind; und,

wenn eine oder beide der Bedeutungen von m und n größer als 1 sind, die sich wiederholenden Einheiten gleich oder verschieden sind.

## Revendications

**1.** Procédé pour la synthèse de polymères ayant une polydispersité <1,7, de la formule générale :

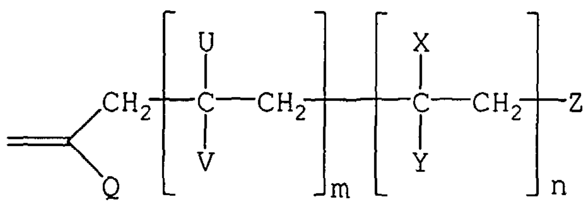

1

comprenant la mise en contact :

(i) d'un monomère vinyle de la formule :

$$CH_2{=}CUV$$

(ii) d'un composé à terminaison vinyle de formule

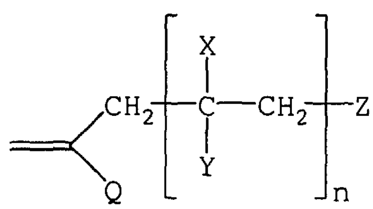

2

et
(iii) de radicaux libres, produits à partir d'une source de radicaux libres; et

l'augmentation de la quantité molaire des polymères, 1, par l'un ou par l'un et l'autre de :

(a) la diminution de la quantité molaire de (iii) pour une quelconque conversion de (i) donnée;
et
(b) la diminution de la quantité molaire de (i) pour une quelconque conversion de (iii) donnée;
dans lequel :

Q est sélectionné parmi le groupe de H, R, OR, $O_2CR$, un halogène, $CO_2H$, $CO_2R$, CN, $CONH_2$, CONHR, et $CONR_2$;
U est sélectionné parmi H et R;
V est sélectionné parmi R, OR, $O_2CR$, un halogène, $CO_2H$, $CO_2R$, CN, $CONH_2$, CONHR, et $CONR_2$;
X est sélectionné parmi H et R;
Y est sélectionné parmi R, OR, $O_2CR$, un halogène, $CO_2H$, $CO_2R$, CN, $CONH_2$, CONHR, et $CONR_2$;
Z est sélectionné parmi le groupe de H, $SR^1$, S(O)R, $S(O)_2R$, $R^2$ et $R^3$;
R est sélectionné parmi le groupe des groupements substitués et non substitués alkyle, aryle, aralkyle, alkaryle et organosilyle dans lesquels le(s) substituants sont sélectionnés indépendamment parmi le groupe d'un carboxyle, un époxy, un hydroxyle, un alcoxy, un amino et un halogène;
$R^1$ est sélectionné parmi le groupe de H, des alkyle, des aryle, des aralkyle, des alkaryle et des organosilyle substitués et non substitués dans lesquels le(s) substituants sont sélectionnés indépendamment parmi le groupe d'un carboxyle, un époxy, un hydroxyle, un alcoxy, un amino et un halogène;
$R^2$ est sélectionné parmi le groupe de fragments dérivés d'un initiateur de radicaux libres de groupements substitués et non substitués alkyle, cycloalkyle, aryle, aralkyle, alkaryle, organosilyle, alcoxyalkyle, alcoxyaryle, des groupes sulfate dans lesquels le(s) substituants sont sélectionnés indépendamment parmi R, $OR^1$, $O_2CR$, un halogène, $CO_2H$ (et ses sels), $CO_2R$, CN, $CONH_2$, CONHR, $CONR_2$,

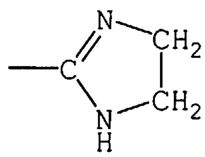

(et ses sels) et

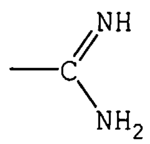

(et ses sels);
$R^3$ est sélectionné parmi le groupe des fragments dérivés d'un agent de transfert de chaîne radicalaire de groupements substitués et non substitués alkyle, cycloalkyle, aryle, aralkyle, alkaryle, organosilyle, alcoxyalkyle, alcoxyaryle et PR2 dans lesquels le(s) substituants sont sélectionnés indépendamment parmi R, $OR^1$, SR, $NR_2$, NHR, $O_2CR$, un halogène, $CO_2H$, $CO_2R$, CN, $CONH_2$, CONHR et $CONR_2$;
m et n sont indépendamment ≥ 1; et

lorsque l'un ou l'autre ou les deux parmi m et n sont supérieurs à 1, les unités répétées sont identiques ou différentes.

**2.** Procédé suivant la revendication 1, dans lequel (i) est sélectionné parmi un ou plusieurs des monomères suivants, un méthylméthacrylate, un éthylméthacrylate, un propylméthacrylate, un butylméthacrylate, un 2-éthylhexylméthacrylate, un i-bornylméthacrylate, un acide méthacrylique, un benzylméthacrylate, un phénylméthacrylate, un méthacrylonitrile, un alpha-méthylstyrène, un méthylacrylate, un éthylacrylate, un propylacrylate, un butylacrylate, un 2-éthylhexylacrylate, un i-bornylacrylate, un acide acrylique, un benzylacrylate, un phénylacrylate, un acrylonitrile, un styrène, des méthylacrylates, acrylates et styrènes fonctionnalisés sélectionnés parmi un glycidylméthacrylate, un 2-hydroxyéthylméthacrylate, un hydroxypropylméthacrylate, un hydroxybutylméthacrylate, un diéthylaminoéthylméthacrylate, un triéthylèneglycolméthacrylate, un anhydride itaconique, un acide itaconique, un glycidylacrylate, un 2-hydroxyéthylacrylate, un hydroxypropylacrylate, un hydroxybutylacrylate, un diéthylaminoéthylacrylate, un triéthylèneglycolacrylate, un méthacrylamide, un N-t-butylméthacrylamide, un N-n-butylméthacrylamide, un N-méthylolméthacrylamide, un N-éthylolméthacrylamide, un N-t-butylacrylamide, un N-n-butylacrylamide, un N-méthylolacrylamide, un N-éthylolacrylamide, un acide vinylbenzoïque, un diéthylaminostyrène, un acide alpha-méthylvinylbenzoïque, un diéthylaminoalpha-méthylstyrène, un para-méthylstyrène, un acide p-vinylbenzènesulfonique, un triméthoxysilylpropylméthacrylate, un triéthoxysilylpropylméthacrylate, un tributoxysilylpropylméthacrylate, un diméthoxyméthylsilylpropylméthacrylate, un diéthoxyméthylsilylpropylméthacrylate, un dibutoxyméthylsilylpropylméthacrylate, un di-i-propoxyméthylsilylpropylméthacrylate, un diméthoxysilylpropylméthacrylate, un diéthoxysilylpropylméthacrylate, un dibutoxysilylpropylméthacrylate, un di-i-propoxysilylpropylméthacrylate, un triméthoxysilylpropylacrylate, un triéthoxysilylpropylacrylate, un tributoxysilylpropylacrylate, un diméthoxyméthylsilylpropylacrylate, un diéthoxyméthylsilylpropylacrylate, un dibutoxyméthylsilylpropylacrylate, un di-i-propoxyméthylsilylpropylacrylate, un diméthoxysilylpropylacrylate, un diéthoxysilylpropylacrylate, un dibutoxysilylpropylacrylate, un di-i-propoxysilylpropylacrylate, un acétate de vinyle, et un butyrate de vinyle, un chlorure de vinyle, un fluorure de vinyle, un bromure de vinyle.

**3.** Procédé suivant la revendication 1, dans lequel (ii) est sélectionné où Q, $-XYC-CH_2-$ Z et "n" sont sélectionnés indépendamment parmi un ou plusieurs des suivants :

Q = H, un méthyle, un éthyle, un butyle, un cyclohexyle, un méthoxy, un éthoxy, un propoxy, un butoxy, un phénoxy, un acétate, un propionate, un butyrate, un benzoate, un carboxylate, un chlore, un brome, un fluor, un iode, un nitrile, un amide, un N-méthylamide, un N-éthylamide, un N-propylamide, un N,N-diméthylamide, un N,N-diéthylamide, un N,N-dibutylamide, un N-méthyl-N-éthylamide, un méthyl-, un éthyl-, un propyl-, un butyl-, un benzyl-, un phényl-, un 2-hydroxyéthyl-, un 3-hydroxypropyl-, un 2-hydroxypropyl-, un 4-hydroxybutyl-, un 3-hydroxybutyl-, un 2-hydroxybutyl-, un 3-triméthoxysilylpropyl-, un 3-triéthoxysilylpropyl-, un 3-tributoxysilylpropyl-, un 3-tri(i-propoxy)silylpropyl-, un 2-aminoéthyl-, un 3-aminopropyl-, un 2-aminopropyl-, un 4-aminobutyl-, un 3-aminobutyl-, un 2-aminobutyl-, un 2-époxypropyl- ou un 3-époxypropylester de carboxylate;

$-XYC-CH_2-$ = dérivé d'un ou de plusieurs des monomères suivants : un méthylméthacrylate, un éthylméthacrylate, un propylméthacrylate, un butylméthacrylate, un 2-éthylhexylméthacrylate, un i-bornylméthacrylate, un acide méthacrylique, un benzylméthacrylate, un phénylméthacrylate, un méthacrylonitrile, un styrène, un alpha-méthylstyrène, un glycidylméthacrylate, un 2-hydroxyéthylméthacrylate, un hydroxypropylméthacrylate, un hydroxybutylméthacrylate, un diéthylaminoéthylméthacrylate, un triéthylèneglycolméthacrylate, un N-t-butylméthacrylamide, un N-n-butylméthacrylamide, un N-méthylolméthacrylamide, un N-éthylolméthacrylamide, un triméthoxysilylpropylméthacrylate, un triéthoxysilylpropylméthacrylate, un tributoxysilylpropylméthacrylate, un diméthoxyméthylsilylpropylméthacrylate, un diéthoxyméthylsilylpropylméthacrylate, un dibutoxyméthylsilylpropylméthacrylate, un di-i-propoxyméthylsilylpropylméthacrylate, un diméthoxysilylpropylméthacrylate, un diéthoxysilylpropylméthacrylate, un dibutoxysilylpropylméthacrylate, un di-i-propoxysilylpropylméthacrylate, un méthylacrylate, un éthylacrylate, un propylacrylate, un butylacrylate, un 2-éthylhexylacrylate, un i-bornylacrylate, un acide acrylique, un benzylacrylate, un phénylacrylate, un acrylonitrile, un styrène, un glycidylacrylate, un 2-hydroxyéthylacrylate, un hydroxypropylacrylate, un hydroxybutylacrylate, un diéthylaminoéthylacrylate, un triéthylèneglycolacrylate, un N-t-butylacrylamide, un N-n-butylacrylamide, un N-méthylolacrylamide, un N-éthylolacrylamide, un acide vinylbenzoïque, un diéthylaminostyrène, un acide p-vinylbenzènesulfonique, un para-méthylstyrène, un triméthoxysilylpropylacrylate, un triéthoxysilylpropylacrylate, un tributoxysilylpropylacrylate, un diméthoxyméthylsilylpropylacrylate, un diéthoxyméthylsilylpropylacrylate, un dibutoxyméthylsilylpropylacrylate, un di-i-propoxyméthylsilylpropylacrylate, un diméthoxysilylpropylacrylate, un diéthoxysilylpropylacrylate, un dibutoxysilylpropylacrylate, un di-i-propoxysilylpropylacrylate, un acétate de vinyle, ou un butyrate de vinyle.

Z = H, $SR^1$, S(O)R, $S(O)_2R$, $R^2$, ou $R^3$;

R = un méthyle, un éthyle, un propyle, un n-butyle, un t-butyle, un i-butyle, un phényle, un benzyle, un 2-phénylpropyle, un triméthoxysilylpropyle, un tributoxysilylpropyle, un hydroxyméthyle, un 2-hydroxyéthyle, un 2-hydroxypropyle, un 2-époxypropyle, un 2-aminoéthyle, un 2-aminopropyle, un méthoxyméthyle, un 2-méthoxyéthyle, un 2-éthoxyéthyle, un 2-méthoxypropyle, ou un heptafluoropropyle;

$R^1$ = un hydrogène, un méthyle, un éthyle, un propyle, un n-butyle, un t-butyle, un i-butyle, un phényle, un benzyle, un 2-phénylpropyle, un triméthoxysilylpropyle, un tributoxysilylpropyle, un hydroxyméthyle, un 2-hydroxyéthyle, un 2-hydroxypropyle, un 2-époxypropyle, un 2-aminoéthyle, un 2-aminopropyle, un méthoxyméthyle, un 2-méthoxyéthyle, un 2-éthoxyéthyle, un 2-méthoxypropyle, ou un heptafluoropropyle;

$R^2$ = un 2,4-diméthylpentanenitrile, un 2-méthylbutanenitrile, un 2-méthylpropanenitrile, un cyclohexanecarbonitrile, un acide 4-cyanopentanoïque, une N,N'-diméthylène-i-butyramidine, un hydrochlorure de N,N'-diméthylène-i-butyramidine, un 2-amidinopropane, un hydrochlorure de 2-amidinopropane, un 2-méthyl-N-[1,1-bis(hydroxyméthyl)éthyl]propionamide, un 2-méthyl-N-[1,1-bis(hydroxyméthyl)-2-hydroxyéthyl]propionamide, un 2-méthyl-N-(2-hydroxyéthyl)propionamide, un hydrate de i-butylamide, un hydroxyle ou un sulfate;

$R^3$ = un 1,1-bis(carboéthoxy)éthyle, un 1,1-bis(carbométhoxy)éthyle, un bis(carboéthoxy)méthyle, un bis(carbométhoxy)méthyle, un 1-(carboéthoxy)-1-phényléthyle, un 1-(carbométhoxy)-1-phényléthyle, un chlore, un brome, un fluor, un iode, un 1-méthyl-1-[carbo(2-époxypropoxy)]éthyle, un 1-méthyl-1-[carbo(2-hydroxyéthoxy)]éthyle, un 1-méthyl-1-[carbo(4-hydroxybutoxy)]éthyle, un 1-méthyl-1-[carbo(2-aminoéthoxy)]éthyle, un 1-méthyl-1-[carbo(3-triméthoxysilylpropoxy)]éthyle, un 1-méthyl-1-[carbo(3-triéthoxysilylpropoxy)]éthyle, un 1-méthyl-1-[carbo(3-diméthoxyéthoxysilylpropoxy)]éthyle, un 1-méthyl-1-[carbo(2-méthoxyéthoxy)]éthyle, un (N,N-diméthylamino)(cyano)méthyle, un N,N-diméthylamino(benzo)méthyle, un thiométhyl(cyano)méthyle, ou un thioéthyl(cyano)méthyle.

$n \geq 1$ et lorsqu'il est supérieur à 1, les unités répétées sont identiques ou différentes.

4. Procédé suivant la revendication 1, dans lequel (iii) est sélectionné parmi un ou plusieurs des suivants : un 2,2'-azobis(i-butyronitrile), un 2,2'-azobis(2-butanenitrile), un acide 4,4'-azobis(4-cyanopentanoïque), un 1,1'-azobis(cyclohexanecarbonitrile), un 2-(t-butylazo)-2-cyanopropane, un 2,2'-azobis[2-méthyl-N-(1,1-bis(hydroxyméthyl)-2-hydroxyéthyl]propionamide, un 2,2'-azobis[2-méthyl-N-(hydroxyéthyl)]propionamide, un dichlorure de 2,2'-azobis(N,N'-diméthylène-i-butyramidine), un dichlorure de 2,2'-azobis(2-amidinopropane), un 2,2'-azobis(N,N'-diméthylène-i-butyramide), un 2,2'-azobis(2-méthyl-N-[1,1-bis(hydroxyméthyl)-2-hydroxyéthyl]propionamide), un 2,2'-azobis[2-méthyl-N-[1,1-bis(hydroxyméthyl)-éthyl]propionamide), un 2,2'-azobis[2-méthyl-N-(2-hydroxyéthyl)propionamide], un dihydrate de 2,2'-azobis(i-butyramide), un t-butylperoxyacétate, un t-butylperoxybenzoate, un t-butylperoxyoctoate, un t-butylperoxynéodécanoate, un t-butylperoxy-i-butyrate, un t-amylperoxypivalate, un t-butylperoxypivalate, un hydroperoxyde de cumène, un dicumylperoxyde, un benzoylperoxyde, un persulfate de potassium, un persulfate d'ammonium.

5. Procédé suivant la revendication 1, dans lequel le composé (2) est un copolymère en blocs de structure générale (1) et le produit est un copolymère tri ou multibloc.

6. Procédé suivant la revendication 1, utilisant une température supérieure à 100°C.

7. Procédé suivant l'une quelconque des revendications précédentes, dans lequel les conditions réactionnelles sont sélectionnées de sorte qu'une polymérisation en l'absence de (2) donne un poids moléculaire au moins 5 fois supérieur à celui en présence de (2).

8. Composition comprenant essentiellement un copolymère en blocs avec une polydispersité <1,7 ayant la formule :

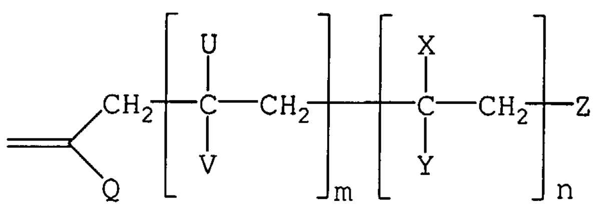

1

dans laquelle

Q est sélectionné parmi le groupe de H, R, OR, $O_2CR$, un halogène, $CO_2H$, $CO_2R$, CN, $CONH_2$, CONHR, et $CONR_2$;

U est sélectionné parmi H et R;

V est sélectionné parmi R, OR, $O_2CR$, un halogène, $CO_2H$, $CO_2R$, CN, $CONH_2$, CONHR, et $CONR_2$;

X est sélectionné parmi H et R;

Y est sélectionné parmi R, OR, $O_2CR$, un halogène, $CO_2H$, $CO_2R$, CN, $CONH_2$, CONHR, et $CONR_2$;

Z est sélectionné parmi le groupe de H, $SR^1$, S(O)R, $S(O)_2R$, $R^2$ et $R^3$;

R est sélectionné parmi le groupe des groupements substitués et non substitués alkyle, aryle, aralkyle, alkaryle et organosilyle dans lesquels le(s) substituants sont sélectionnés indépendamment parmi le groupe d'un carboxyle, un époxy, un hydroxyle, un alcoxy, un amino et un halogène;

$R^1$ est sélectionné parmi le groupe de H, des alkyle, des aryle, des aralkyle, des alkaryle, des organosilyle substitués et non substitués dans lesquels le(s) substituants sont sélectionnés indépendamment parmi le groupe d'un carboxyle, un époxy, un hydroxyle, un alcoxy, un amino et un halogène;

$R^2$ est sélectionné parmi le groupe de fragments dérivés d'un initiateur de radicaux libres de groupements substitués et non substitués alkyle, cycloalkyle, aryle, aralkyle, alkaryle, organosilyle, alcoxyalkyle, alcoxyaryle, sulfate dans lesquels le(s) substituants sont sélectionnés indépendamment parmi R, $OR^1$, $O_2CR$, un halogène, $CO_2H$ (et ses sels), $CO_2R$, CN, $CONH_2$, CONHR, $CONR_2$,

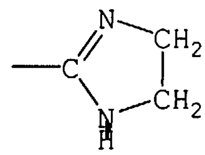

(et ses sels) et

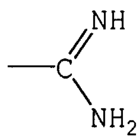

(et ses sels);

$R^3$ est sélectionné parmi le groupe des fragments dérivés d'un agent de transfert de chaîne radicalaire de groupements substitués et non substitués alkyle, cycloalkyle, aryle, aralkyle, alkaryle, organosilyle, alcoxyalkyle, alcoxyaryle et $PR_2$ dans lesquels le(s) substituants sont sélectionnés indépendamment parmi R, $OR^1$, SR, $NR_2$, NHR, $O_2CR$, un halogène, $CO_2H$, $CO_2R$, CN, $CONH_2$, CONHR et $CONR_2$;

m et n sont indépendamment $\geq 1$; et

lorsque l'un ou l'autre ou les deux parmi m et n sont supérieurs à 1, les unités répétées sont identiques ou différentes.

**9.** Composition comprenant essentiellement un copolymère en blocs avec une polydispersité <1,5, ayant la formule :

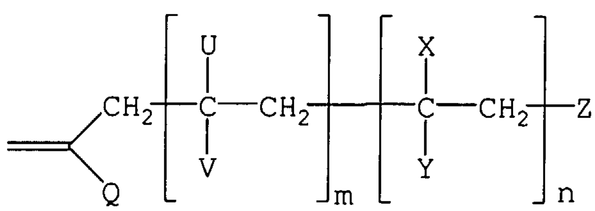

1

dans laquelle

Q est sélectionné parmi le groupe de H, R, OR, $O_2CR$, un halogène, $CO_2H$, $CO_2R$, CN, $CONH_2$, CONHR, et $CONR_2$;

U est sélectionné parmi H et R;

V est sélectionné parmi R, OR, $O_2CR$, un halogène, $CO_2H$, $CO_2R$, CN, $CONH_2$, CONHR, et $CONR_2$;

X est sélectionné parmi H et R;

Y est sélectionné parmi R, OR, $O_2CR$, un halogène, $CO_2H$, $CO_2R$, CN, $CONH_2$, CONHR, et $CONR_2$;

Z est sélectionné parmi le groupe de H, $SR^1$, S(O)R, $S(O)_2R$, $R^2$ et $R^3$;

R est sélectionné parmi le groupe des groupements substitués et non substitués alkyle, aryle, aralkyle, alkaryle et organosilyle dans lesquels le(s) substituants sont sélectionnés indépendamment parmi le groupe d'un carboxyle, un époxy, un hydroxyle, un alcoxy, un amino et un halogène;

$R^1$ est sélectionné parmi le groupe de H, des alkyle, des aryle, des aralkyle, des alkaryle et des organosilyle substitués et non substitués dans lesquels le(s) substituants sont sélectionnés indépendamment parmi le groupe d'un carboxyle, un époxy, un hydroxyle, un alcoxy, un amino et un halogène;

$R^2$ est sélectionné parmi le groupe de fragments dérivés d'un initiateur de radicaux libres de groupements substitués et non substitués alkyle, cycloalkyle, aryle, aralkyle, alkaryle, organosilyle, alcoxyalkyle, alcoxyaryle, sulfate dans lesquels le(s) substituants sont sélectionnés indépendamment parmi R, $OR^1$, $O_2CR$, un halogène, $CO_2H$ (et ses sels), $CO_2R$, CN, $CONH_2$, CONHR, $CONR_2$,

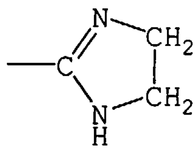

(et ses sels) et

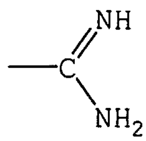

(et ses sels) ;

$R^3$ est sélectionné parmi le groupe des fragments dérivés d'un agent de transfert de chaîne radicalaire de groupements substitués et non substitués alkyle, cycloalkyle, aryle, aralkyle, alkaryle, organosilyle, alcoxyalkyle, alcoxyaryle et $PR_2$ dans lesquels le(s) substituants sont sélectionnés indépendamment parmi R, $OR^1$, SR, $NR_2$, NHR, $O_2CR$, un halogène, $CO_2H$, $CO_2R$, CN, $CONH_2$, CONHR et $CONR_2$;

m et n sont indépendamment ≥ 1; et

lorsque l'un ou l'autre ou les deux parmi m et n sont supérieurs à 1, les unités répétées sont identiques ou différentes.